(19) Europäisches Patentamt
European Patent Office
Office européen des brevets

(11) **EP 4 461 564 A1**

(12) **EUROPEAN PATENT APPLICATION**

(43) Date of publication:
**13.11.2024 Bulletin 2024/46**

(21) Application number: **24173862.4**

(22) Date of filing: **02.05.2024**

(51) International Patent Classification (IPC):
**B60C 9/20** *(2006.01)* **B60C 11/00** *(2006.01)*
**B60C 11/16** *(2006.01)*

(52) Cooperative Patent Classification (CPC):
**B60C 9/2006; B60C 9/2009; B60C 11/005;
B60C 11/16;** B60C 15/0045; B60C 15/0054;
B60C 2011/0025

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.05.2023 EP 23172077**

(71) Applicant: **Nokian Renkaat Oyj**
**37101 Nokia (FI)**

(72) Inventors:
• **LIUKKULA, Mikko**
**37101 Nokia (FI)**

• **ILOMÄKI, Jouko**
**37101 Nokia (FI)**
• **HEIKKINEN, Lauri**
**37101 Nokia (FI)**
• **KEMPPAINEN, Noora**
**37101 Nokia (FI)**
• **LAITILA, Aappo**
**37101 Nokia (FI)**
• **SHAKUN, Alexandra**
**37101 Nokia (FI)**

(74) Representative: **Berggren Oy**
**P.O. Box 16**
**Eteläinen Rautatiekatu 10A**
**00101 Helsinki (FI)**

(54) **A STUDDED TIRE**

(57) The invention relates to a method for manufacturing a studded pneumatic tire for a vehicle, the tire comprising studs (10), at least one ply (288), at least one metal belt (286, 287), a cap layer (23) forming at least part of a running surface of the studded pneumatic tire, an underlayer (21) made of a first rubber compound, and an intermediate layer (22) made of a second rubber compound, the intermediate layer (22) being arranged, at least partially, between the underlayer (21) and the cap layer (23), wherein the method comprises steps of forming an annular belt comprising a metal belt, the underlayer, the intermediate layer, and the cap layer, then arranging the annular belt onto an annular carcass comprising the at least one ply to form a preform, vulcanizing the preform, and installing studs. The invention further relates to a studded pneumatic tire for a vehicle.

Fig. 3a

**Description**

Technical field

The invention relates to studded pneumatic tires for vehicles. The invention relates to a method for manufacturing studded pneumatic tires for vehicles.

Background

Tires typically comprises a tread, which is designed to provide a running surface of the tire for ground-contacting purposes.

Further, it is known to install studs particularly in winter tires developed for snowy and icy roads. A stud typically comprises a body of the stud and a pin of the stud. The pin of the stud, or a part of it, is intended to be in contact with the ground surface.

The function of the studs is to penetrate to the ice and thereby to form a mechanical bond between the ground surface and the tire, particularly for situations in which a sufficient result is not provided merely by the rubber of the tire and the pattern formed in it.

Summary

It is an aim of this specification to provide a studded pneumatic tire for a vehicle. It is an aim of this specification to provide a method for manufacturing a studded pneumatic tire for a vehicle.

Aspects of the invention are characterized by what is stated in the independent claims. Some preferred embodiments are disclosed in the dependent claims. These and other embodiments are disclosed in the description and figures.

Temperature may change from freezing to warm during a spring. Furthermore, when autumn is turning into winter, roads are often wet. Thus, when the temperature drops e.g. during a nighttime, road surfaces can freeze. Thus, on one day, roads can be icy, and another day roads can be unfrozen. Furthermore, it is possible that roads change from icy surfaces into dry and unfrozen surfaces within a daytime. Thus, it has been difficult to obtain tires having good grip on icy surfaces without wearing roads too much when roads are unfrozen.

Winter tires can have a softer tread layer rubber composition than summer tires. Further, winter tires can have a tread structure designed for winter conditions. Only some winter tires are studded tires, i.e., tires having plurality of studs having pins penetrating into ice on a road surface. Thanks to the studs, increased traction is provided when the road surface is icy. However, road wear can be increased due to the studs.

The tire according to this specification is a studded pneumatic tire comprising a circumferential tread which is configured to form a contact with a driving surface when the tire is used. The term "studded" refers to a tread provided with studs.

The studded tire has a cap layer forming at least part of the outer surface of the tread. The tread of the studded tire can have a groove having a groove depth, the groove depth extending from a surface of the tread to the base of the groove.

An intermediate layer can be provided, at least partly, under the cap layer. Further, an underlayer can be provided under the intermediate layer. Thus, the intermediate layer can be left in between the underlayer and a cap layer.

The studs can be arranged into stud holes which penetrate through the cap layer and the intermediate layer, into the underlayer.

Thus, the studs can be arranged in connection with the underlayer. Preferably, the studs are arranged so that a bottom flange of the stud extends into the underlayer. Most preferably, the studs are arranged so that a bottom flange of the stud is surrounded by the underlayer.

The tire according to this specification can comprise

- at least one ply,
- at least one metal belt,
- a cap layer forming at least part of a running surface of the studded pneumatic tire,
- an underlayer made of a first rubber compound, and
- an intermediate layer made of a second rubber compound, the intermediate layer being arranged, at least partially, between the underlayer and the cap layer, and
- studs.

Technical effect is to provide an improved studded pneumatic tire.

A method for manufacturing a tire can comprise the following steps:

- forming an annular belt comprising

  - metal belt(s),
  - optionally at least one textile belt,
  - the underlayer,
  - the intermediate layer, and
  - the cap layer,

- arranging the annular belt onto an annular carcass to form a preform,
- vulcanizing the preform, and
- installing studs.

Thus, the underlayer is made of a first rubber compound. The first rubber compound can have a hardness (ShA) between 45 ShA and 65 ShA, determined at an ambient temperature of 23°C according to standard ASTM D2240-15. Technical effect is that the underlayer is able to reduce road wear at 23°C.

Further, the intermediate layer is made of a second rubber compound. The second rubber compound can have a hardness (ShA) between 66 ShA and 80 ShA, determined at an ambient temperature of 23°C according to standard ASTM D2240-15. Technical effect is that the intermediate layer is able to improve stability of tires having the underlayer.

In an embodiment, the first rubber compound has a first hardness (ShA) and the second rubber compound has a second hardness (ShA), wherein the first hardness (ShA) is between 43 ShA and 62 ShA, determined at an ambient temperature of 22 °C according to standard ASTM D2240-15, and the second hardness (ShA) is between 63 ShA and 80 ShA, determined at an ambient temperature of 22 °C according to standard ASTM D2240-15. Technical effect is to provide an advantageous combination wherein the underlayer is able to reduce road wear at 22°C and the intermediate layer is able to improve stability of tires having the underlayer.

In an embodiment, the first rubber compound has a first hardness (ShA) and the second rubber compound has a second hardness (ShA), and a hardness (ShA) difference between the first rubber compound and the second rubber compound is at least 10%, preferably at least 15% determined at -25°C so that the second rubber compound is at least 10%, preferably at least 15% softer than the first rubber compound, determined according to standard ASTM D2240-15 with an exception that the hardness is determined at a temperature of -25°C and the rubber compounds are tempered according to Table 1 of the specification. Technical effect is that the underlayer made of the first rubber compound substantially improves ice grip of the tire on an icy road.

A position of a tan delta maximum of the underlayer can be configured to be between -10°C and +15°C, determined according to ISO 4664-1:2011 in compression. Further, preferably, position of tan delta maximum of the intermediate layer can be configured to be between -40°C and -70°C. Technical effect is that in warm conditions, the underlayer can substantially soften, whereby the underlayer can allow the stud body to retract into the tread of the tire, whereby it can reduce the stud's dynamic impact and thereby reduce the wear of the road. Furthermore, when the underlayer substantially softens in warm conditions, the intermediate layer can substantially maintain its stiffness and therefore support the stud and the whole tire.

An average thickness of the underlayer can be at least 0.5 mm and not greater than 7 mm, and an average thickness of the intermediate layer can be at least 0.4 mm and not greater than 7 mm. Technical effect is that the underlayer having said thickness can allow the stud body to retract into the tread of the tire while the intermediate layer having said thickness can support the whole tire and maintain handling properties of the tire when the underlayer softens.

A thickness of the underlayer determined from a location of a stud, from a bottom of the stud to an inner surface of the underlayer, is preferably at least 0.3 mm. Technical effect is that the underlayer having said minimum thickness can allow the stud body to retract into the tread of the tire.

A thickness of the intermediate layer, determined at a location wherein the intermediate layer is surrounding a stud, can be at least 0.4 mm, preferably at least 0.5 mm. Technical effect is that the intermediate layer having said minimum thickness at a location surrounding a stud can support the stud and keep it firmly at its installation place.

A dynamic stiffness (E*, MPa) of the underlayer can be configured to be less than 25 MPa, preferably from 5 to 20 MPa, determined at 20°C according to ISO 4664-1:2011 in compression. Further, the dynamic stiffness of the intermediate layer can be configured to be at least 25 MPa, preferably from 30 to 100 MPa, determined at 20°C according to ISO 4664-1:2011 in compression. The values can be determined from rubber compounds using a sample having a diameter of 10.0 mm and a height of 10.0 mm. Preferably, the sample has dimensions of diameter 4.5 mm $\times$ height 5.0 mm, when determined from a tire, and diameter 10.0 mm $\times$ height 10.0 mm, when determined from a rubber compound.

Technical effect is to decrease road wear while the intermediate layer supports the whole tire and the studs of the tire at the warmer temperature.

A dynamic stiffness (E*, MPa) of the underlayer (i.e., complex normal modulus), determined at 0°C, can be configured to be at least 2 times the dynamic stiffness of the underlayer determined at 20°C, determined according to ISO 4664-1:2011 in compression. Technical effect is that the winter grip properties of the winter tire can be substantially improved while road wear can be reduced at warmer temperatures. Further, stopping distance needed by the studded tire under certain conditions can be substantially reduced.

The dynamic stiffness of the intermediate layer, determined at 0°C, can be configured to be from 1 to 1.5 times the dynamic stiffness of the intermediate layer determined at 20°C, determined according to the standard ISO 4664-1:2011. Technical effect is that as the dynamic stiffness is not decreasing too much at warmer temperatures, but the intermediate layer is able to support the whole tire when the underlayer softens.

The dynamic stiffness (E*, MPa) of the underlayer, determined at -25°C, can be configured to be at least 20 times the dynamic stiffness of the underlayer determined at +20°C, determined according to the standard ISO 4664-1:2011. Thus, the ice grip properties of the tire can be substantially improved, and, for example, the braking distance needed by the winter tire under certain conditions can be substantially reduced. Further technical effect is to decrease road wear at warmer temperatures.

In an embodiment, the underlayer includes

- a total amount of 10 to 50 phr, preferable 10 to 40 phr of natural rubber (NR) and/or synthetic isoprene rubber (IR), and
- optionally, 10 to 30 phr, preferable 10-20 phr of polybutadiene rubber (BR).

In an advantageous embodiment, the underlayer comprises:

- natural rubber (NR) from 0 to 70 phr, preferably from 0 to 50 phr,

    and/or butadiene rubber (BR) from 0 to 30 phr,
    and/or synthetic isoprene rubber (IR) from 0 to 70 phr, preferably from 0 to 50 phr,
    so that a total amount of (natural rubber, butadiene rubber and synthetic isoprene rubber) is from 0 to 70 phr, preferably from 30 to 60 phr,

- solution polymerized styrene-butadiene rubber (SSBR) from 30 to 100 phr, preferably from 40 to 70 phr,
- one or more reinforcing fillers from 35 to 80 phr, and
- one or more resins from 5 to 40 phr.

Technical effect is that by using said contents, tan delta peak can be particularly efficiently adjusted to a desired temperature range, improving properties of the underlayer.

Advantageously, the underlayer contains

- a total amount of 10 to 50 phr, most preferable 10 to 40 phr of NR (natural rubber) and/or IR (synthetic isoprene rubber), and
- from 30 phr to 90 phr of SSBR, most preferably from 40 to 70 phr SSBR (solution polymerized styrene-butadiene rubber).

Technical effect of said combination is that the position of tan delta peak can be efficiently adjusted as desired, and hardness of the underlayer can increase at a desired temperature, particularly when used together with the reinforcing fillers and resins according to this specification.

In an embodiment, the underlayer contains,

- at least 30 phr of SSBR,
- a total amount of 10 to 50 phr, preferable 10 to 40 phr of natural rubber and/or synthetic isoprene rubber, and
- optionally, 10 to 30 phr, preferable 10-20 phr of polybutadiene rubber.

As discussed, the underlayer can contain solution polymerized styrene-butadiene rubber (SSBR) from 30 to 100 phr, preferably from 35 to 90 phr, and most preferably from 40 to 70 phr. Technical effect is that the position of tan delta peak can be efficiently adjusted as desired. Further technical effect is that hardness of the underlayer can be easily controlled so that the hardness is increased at a desired temperature, particularly when used together with the reinforcing fillers and resins according to this specification.

The underlayer can comprise such solution-polymerized styrene butadiene rubber that has, when preparing the underlayer,

- a vinyl content in a range between 33% and 65%, preferably in a range between 38% and 61%, wherein the vinyl contents are expressed in mol % relative to the butadiene, and
- a styrene content between 25% and 45%, preferably between 27% and 40%, wherein the styrene content is expressed in mass % relative to the whole polymer,

determined according to ISO 21561-1:2015. Technical effect is that microstructure of SSBR has an effect on properties of the SSBR and by using said contents, properties of the underlayer can be more easily determined as desired.

In an embodiment, one or more resins of the underlayer are selected from a group consisting of

- petroleum hydrocarbon resin,
- aromatic vinyl-based resin,
- phenol-based resin,
- terpene resin,
- terpene phenol resin,
- rosin derived resins and copolymers, and
- mixtures and/or modifications thereof.

The reinforcing fillers of the underlayer can comprise carbon black and/or silica, so that a combined amount of carbon black and silica is from 35 to 80 phr, more preferably from 40 to 60 phr.

Thus, in an advantageous embodiment, the underlayer comprises one or more reinforcing fillers selected from

- carbon blacks, and
- silicas,

wherein a total amount of said reinforcing fillers is from 35 to 80 phr, more preferably from 40 to 70 phr, and most preferably from 40 to 60 phr.

A studded tire comprising an underlayer whose hardness and stiffness are substantially dependent on the ambient temperature can involve a variety of advantages. Stiffening and hardening of the underlayer can increase the dynamic impact of the stud because the stud thus cannot substantially retract into the tread of the tire, whereby the penetration of the stud into the ice is greater and the grip of the tire can be significantly better. A stiffer underlayer provides the stud with more support, whereby grip in icy conditions can be substantially improved as the temperature drops. In warm conditions, the underlayer can substantially soften, whereby the underlayer can allow the stud body to retract into the tread of the tire, whereby it can reduce the stud's dynamic impact and thereby reduce the road wear. Furthermore, when the underlayer substantially softens in warm conditions, the intermediate layer can maintain its stiffness and therefore support the stud and the tread, as well as improve handling properties of the tire. Thus, thanks to the underlayer and the intermediate layer, road wear can be reduced, and the noise level can be lowered in warm conditions.

The underlayer can dampen the force of the stud when the stud is not necessary for securing ice grip. Thus, harmful noise caused by the studded tire, also inside the vehicle, can be substantially reduced. In addition, road wear caused by the studded tire can be substantially reduced. Furthermore, the studded tire comprising an underlayer whose hardness and/or stiffness is substantially dependent on the ambient temperature can improve braking force of the stud by providing better stud protrusion into icy surface when the ambient temperature drops below the freezing point, whereby the stud generates a sufficient force to bring the grip of the studded tire up to a desired level. The underlayer can also, together with the intermediate layer, improve stability of the stud, particularly during braking and acceleration of a vehicle. Furthermore, the intermediate layer can support the tire, providing better handling properties while the underlayer softens.

At an ambient temperature above 0°C, the underlayer can be an elastic component which has the capacity to resume its original stiffness after compression. In a preferred example, the underlayer is made, or at least primarily made, of an elastomer material which has, after compression, the capacity to resume its initial stiffness, at an ambient temperature above 0°C. This can substantially reduce road wear when the ambient temperature is so high that no ice is formed on the road.

The studded tire according to this specification has the advantage that the ice grip of studs in the tire can be at their best when the winter grip properties of the studded tire are needed, that is, on an icy surface. Thus, the efficiency and the ice grip properties of the studs can be particularly good when the studded tire is used in cold temperatures, e.g., below zero degrees (°C). In warm conditions, on the other hand, the stud can retract at least partly into the tire, whereby the properties of the cap layer forming at least most of the running surface of the tread of the tire can have a greater impact on the grip properties of the tire when the driving surface is not frozen. Further, the softened underlayer could, without the intermediate layer, cause decreased handling properties for the tire. However, in said warm conditions, the intermediate layer is supporting the tire and hence improving handling properties of the tire.

Thus, a winter tire according to this specification can protect driving surfaces and reduce road wear. Furthermore, when driving in warm conditions, the noise caused by the studded tire can be at a lower level than normal.

The novel solution can also have the advantage that existing tire molds and tire manufacturing techniques can be used for manufacturing novel tires. This can improve the cost efficiency of tire manufacture as well as be a solution of particular environmental friendliness.

The new solution can also improve stud retention because the stud can more efficiently retract at least partly into the tread of the tire when the road surface is not frozen while the intermediate layer can support the stud, keeping it firmly at its installation place.

Brief description of the drawings

In the following, the invention will be described in more detail with reference to the appended drawings, in which

| | |
|---|---|
| Figs 1a-b | illustrate an example of a tire, |
| Fig. 2a | illustrates, in a half cross section, an example of a tire, |
| Fig. 2b | illustrates, in a quarter cross section, an example of a tire, |
| Figs 3a, 3b1-3b2 | illustrate example locations of a stud, an underlayer, an intermediate layer, and a cap layer, |
| Fig. 3c | illustrates a stud according to an example, |
| Figs 4a-e, 5a-b, and 7a-c | illustrate, in a half cross section, examples of an underlayer, an intermediate layer, and a cap layer, |
| Fig. 6a | illustrates an example of a tan delta curve showing a ratio of loss modulus to storage modulus of an underlayer (line 1) and an intermediate layer (line 2) as a function of temperature, determined from -60°C to +70 °C, and |
| Fig. 6b | illustrates the dynamic stiffness of an underlayer (line 1) and an intermediate layer (line 2) according to an example, as a function of temperature. |

The Figures are intended to illustrate the general principles of the disclosed solution. Therefore, the illustrations in the Figures are not necessarily in scale or suggestive of precise layout of system components.

Detailed description

In the text, references are made to the Figures with the following numerals and denotations:

| | |
|---|---|
| 1 | tire, |
| 10 | stud, |
| 11 | pin of the stud, |
| 12 | upper flange of the stud, |
| 13 | waist of the stud, |
| 14 | bottom flange of the stud, |
| 14b | bottom of the stud, |
| 20 | tread of tire, |
| 21 | underlayer, |
| 21t | thickness of the underlayer, |
| 22 | intermediate layer, |
| 22t | thickness of the intermediate layer, |
| 23 | cap layer, |
| 23t | thickness of the cap layer, |
| 24 | electrically conductive portion, |
| 24w | width of the electrically conductive portion, |
| 25 | inner surface of the underlayer, |
| 26 | outer surface of the underlayer, |
| 30 | contact patch, |
| 130 | inner surface of the tire, |
| 145 | sidewalls, |
| 150 | bead region, |
| 151 | first bead region, |
| 152 | second bead region, |
| 200 | contact surface, such as a road, |

| 284 | a textile belt, |
| 286, 287 | metal belt(s), |
| 288 | ply, |
| AXR | axis of rotation of tire, |
| SC | circumferential direction, |
| SR | radial direction, |
| CL | circumferential central line, and |
| EP | equatorial plane. |

In this application, the term "tire" refers to a studded pneumatic tire for a vehicle. The tire can be a studded pneumatic tire for a car or a van. The tire comprises a tread provided with studs.

In particular, the tyre may be a tyre for a vehicle of class M1 or N1 as defined in the Consolidated Resolution on the Construction of Vehicles (R.E.3), document ECE/TRANS/WP.29/78/Rev.4, para. 2. These classes are:

- M1: Vehicles used for the carriage of passengers and comprising not more than eight seats in addition to the driver's seat, and
- N1: Vehicles used for the carriage of goods and having a maximum mass not exceeding 3.5 tonnes.

In this specification, the term "phr" refers to parts by weight of an ingredient per 100 parts by weight of rubber, unless otherwise indicated.

In this specification, the term "carbon black" refers to rubber reinforcing carbon blacks unless otherwise indicated.

In this specification, the term "SBR" refers to styrene butadiene rubber.

In this specification, the term "ESBR" refers to emulsion polymerized styrene butadiene rubber.

In this specification, the term "SSBR" refers to solution polymerized styrene butadiene rubber.

In this specification, the term "BR" refers to butadiene rubber.

In this specification, the term "NR" refers to natural rubber.

Natural rubber can be obtained by harvesting e.g. rubber trees (Hevea brasiliensis) or non-rubber trees such as guayule or dandelion, e.g. Taraxacum koksaghyg.

Natural rubber can be a cis-1,4 polyisoprene, wherein the cis-1,4 content in the natural rubber is greater than 99% by weight.

In this specification, the term "IR" refers to synthetic isoprene rubber.

A synthetic isoprene rubber (IR) has similar molecular structure as natural rubber and is very much like natural rubber but made synthetically. The natural rubber can be replaced with the synthetic isoprene rubber and still maintain the technical effects of the natural rubber. Thus, in all embodiments of this specification, from 0 to 100 wt.% of the natural rubber NR can be replaced with the synthetic isoprene rubber IR.

In this specification, the term "electrically conductive path" refers to an electrical path of least electrical resistance. The electrically conductive path may extend from the bead regions to the running surface of the tire.

Resistivity can be determined, depending on an object and/or material to be measured, according to standard W.d.K 110 (Measurement of the Electrical Resistance of Tires), or according to standard ISO 2878:2017 (Rubber, vulcanized or thermoplastic, antistatic and conductive products, determination of electrical resistance).

The term "tan delta" refers to tan $\delta$.

The term "tan delta curve" refers to a curve showing a ratio of loss modulus to storage modulus.

The terms "tan delta maximum" refers to a maximum value of a tan delta curve, which can be determined from a tan delta curve.

The term "position of tan delta maximum" refers to a temperature in which the maximum value of a tan delta curve is obtained. Thus, "position of tan delta maximum" can be determined, for example, as a position of maximum tan delta value of the tan $\delta$ curve.

The term "tan delta peak" refers to a peak of a tan delta curve, the peak showing maximum values and temperatures associated therein.

In this specification, the term Dynamic stiffness (E*) refers to the complex normal modulus (i.e., dynamic modulus of elasticity E*) of the material which can be determined by DMTA test according to the standard ISO 4664-1:2011. The Dynamic stiffness (E*) can be used to determine a stiffness of the material. Unless otherwise indicated, a tan delta curve is determined with Dynamic Mechanical Thermal Analysis (DMTA) as a loss tangent (E"/E') from a cylindric sample in compression. The tan delta curve can be determined by using a temperature range from -60° C to 70° C, a heating rate of 2°K/min and a 10Hz frequency. The values can be determined from rubber compounds of a tire as well as from rubber compounds to be used for a tire, before forming the tire. The sample has dimensions of diameter 4.5 mm × height 5.0 mm, when determined from a tire. Further, the sample has dimensions of diameter 10.0 mm × height 10.0 mm, when determined from a rubber compound.

Thus, the values for tan delta curve of this specification can be determined as follows:

Dynamic Mechanical Thermal Analysis ("DMTA") tests provide information about the small-strain mechanical response of the samples as a function of temperature. Sample specimens can be tested using a commercially available DMTA equipment in compression mode according to ISO 4664-1:2011. The specimen is cooled to -60° C and then heated to 70° C at a rate of 2° C/min while subjected to

- an oscillatory deformation at 0.6% dynamic strain with 3.0% static strain and a frequency of 10Hz, when using a sample having a diameter of 4.5 mm and a height of 5.0 mm, and
- an oscillatory deformation at 0.05% dynamic strain with 0.2% static strain and a frequency of 10Hz, when using a sample having a diameter of 10.0 mm and a height of 10.0 mm.

The output of the DMTA test is the storage modulus (E') and the loss modulus (E"). The storage modulus indicates the elastic response or the ability of the material to store energy, and the loss modulus indicates the viscous response or the ability of the material to dissipate energy. The ratio of E"/E', called tan delta, gives a measure of the damping ability of the material; peaks in tan delta are associated with relaxation modes for the material, such as glass transition.

The dynamic modulus of elasticity E* (MPa) can be defined by the equation $E^* = E' + iE''$, with:

E': real part of E*,

E' characterizing the stiffness or the viscoelastic behavior of the composition (i.e. the energy stored and totally restored); $i = \sqrt{-1}$, and

E": imaginary part of E*, E" characterizing the viscous behavior of the composition.

The term "Tg" refers to a glass transition temperature.

Glass transition temperature Tg for resins can be determined as a peak midpoint by a differential scanning calorimeter (DSC) at a temperature rate of increase of 10°C per minute, according to ASTM D6604 (or equivalent).

In this specification, the term hardness (ShA) refers to Shore A hardness which can be determined according to the standard ASTM D2240-15. An exception to the standard, hardness can be measured for materials of different temperatures. The material to be measured is first tempered at the reference temperature by keeping the material to be measured at the reference temperature for a time given in Table 1 before the measurements.

Table 1. Tempering of a sample before hardness measurement.

| Sample | Temperature (°C) | | | | | | | | | | |
|---|---|---|---|---|---|---|---|---|---|---|---|
| Thickness (mm) | -50 to less than -40 | -40 to less than -25 | -25 to less than -10 | -10 to less than -5 | -5 to less than 0 | 0 to less than 5 | 5 to less than 10 | 10 to less than 25 | 25 to less than 40 | 40 to less than 60 | 60 |
| | Time (min) to balance | | | | | | | | | | |
| 10 | 45 | 45 | 40 | 35 | 35 | 30 | 35 | 35 | 35 | 35 | 45 |
| 8 | 35 | 35 | 30 | 30 | 30 | 25 | 30 | 30 | 30 | 30 | 35 |
| 5 | 20 | 20 | 20 | 20 | 20 | 15 | 20 | 20 | 20 | 20 | 20 |
| 3 | 15 | 15 | 15 | 15 | 15 | 10 | 10 | 10 | 10 | 10 | 10 |
| 2 | 10 | 10 | 10 | 10 | 10 | 10 | 10 | 10 | 10 | 10 | 10 |

***Winter tire***

The winter tire 1 can be a studded pneumatic tire. Thus, the tire 1 comprises studs 10, which have been installed into at least some of the tread blocks. In the tire, at least the pins 11 of the studs are exposed on the tread.

Thus, the winter tire 1 comprises a tread 20, which is in contact with a surface 200 such as a road surface during the normal use of the tire 1. Such a tread 20 typically comprises a tread pattern which comprises a plurality of tread blocks.

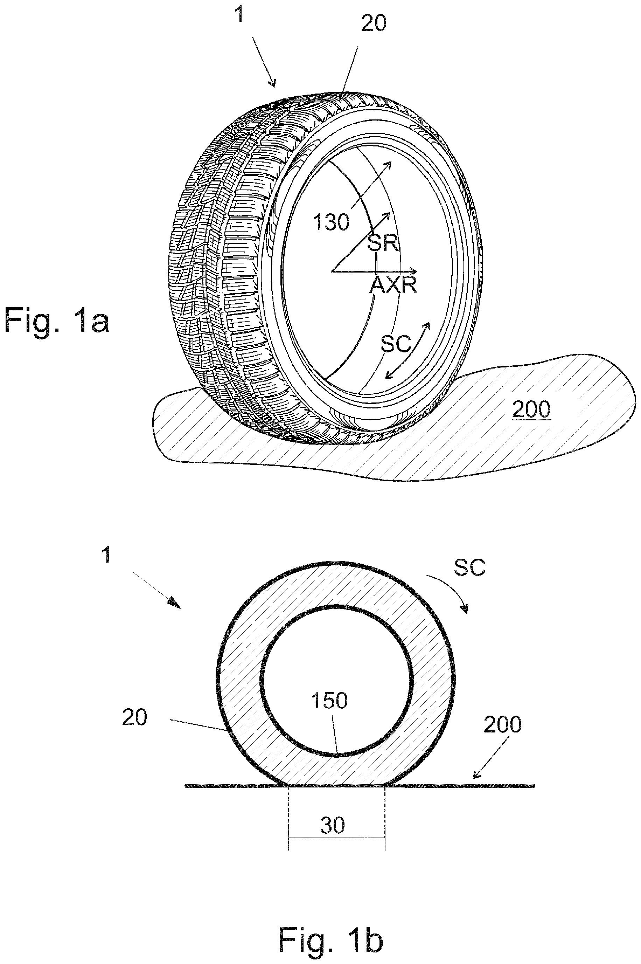

As illustrated in Fig. 1b, an area of the contact of the tread 20 with the surface 200 forms a contact patch 30. Typically, the contact patches 30 of the tires 1 are the only connections between the road and the motor vehicle.

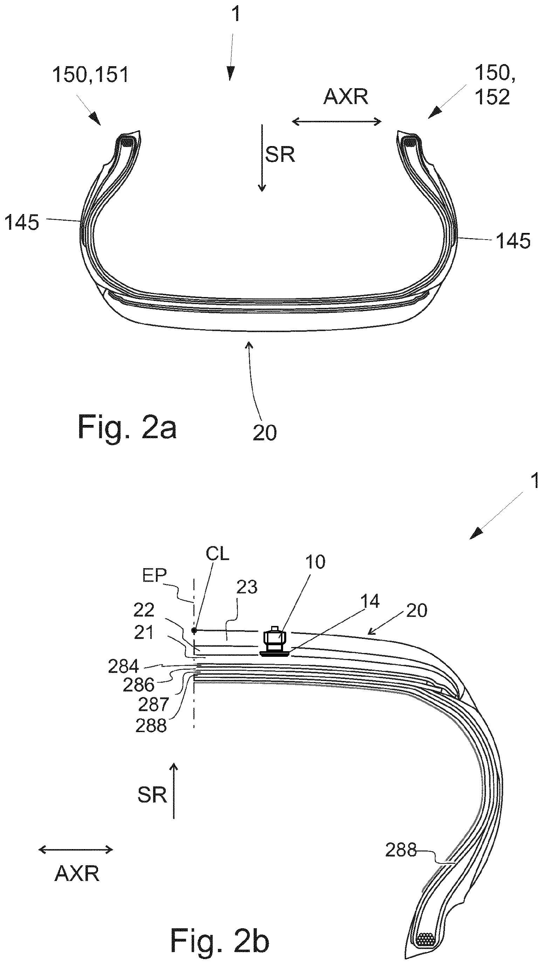

As illustrated in Figs 2a-2b, the tire can comprise

- a circumferential tread 20 which is being configured to form a contact with a surface 200 when the tire 1 is used,
- a first bead region 151 and a second bead region 152, which bead regions are spaced apart, wherein the bead regions have mounting surfaces adapted for mounting the tire on a rim of a wheel, wherein each bead region has a cable, and
- sidewalls 145, i.e., a first sidewall extending between the first bead region and the tread, and a second sidewall extending between the second bead region and the tread.

As is known, the tire 1 rotates around an axis of rotation AXR.

The sidewalls 145 connect the bead regions of the tire to the tread 20. The sidewalls may have various markings indicating the tire size, tire speed class, tire purpose (winter/summer), tire manufacturer and/or tire name.

In addition to the tread 20 of the tire 1, the structure of the tire 1 provides for sufficient rigidness of the tire 1 and thereby also affect the handling properties of the tire 1.

The tread 20 is provided as an outermost layer of a carcass of the studded tire 1. A quarter of a cross-section of a tire 1 is shown in Fig. 2b.

The cross-section of the tire 1 comprises the axis of rotation of the tire AXR, which is parallel to the axial direction and located in the center defined by the tire 1. Such cross-section has two parts, which are substantially identical. A half of only one of the parts is shown in Fig. 2b. An equatorial plane EP of the tire 1 divides the tire to two equally large parts. The circumferential central line CL defined above is arranged in the equatorial plane EP.

As detailed above, the tire 1 comprises the tread 20, which is an outermost layer of the carcass. The carcass of the studded tire 1 can further comprise one or more layers of reinforcing textile and one of more reinforcing metal layers.

Thus, the tire 1 comprises a first ply 288. The ply 288 may comprise fibrous material, e.g. Kevlar, polyamide, carbon fibres, polyester, or glass fibres. In an embodiment, the tire further comprises a second ply. In this embodiment, the second ply may also comprise fibrous material.

The tire further comprises a first metal belt 287. Preferably, the tire further comprises a textile belt 284, such as a textile belt 284 comprising fibrous polyamide e.g. Nylon, aramid, or Cordura.

Preferably, the tire comprises the textile belt 284, the first ply 288, the first metal belt 287, and a second metal belt 286. Technical effect is to improve handling properties of the tire comprising the underlayer. The metal belt(s) 287, 286 can be resilient metal belts, such as steel belts comprising wires. Preferably, the tire comprises only one textile belt. However, in an embodiment, the tire may further comprise a second textile belt.

The running surface of the tire can be formed, at least mainly, by the cap layer 23. Under the cap layer 23, the tire comprises the intermediate layer and the underlayer 21, wherein the intermediate layer 22 can be arranged in between the underlayer 21 and the cap layer 23.

Preferably, the studs 10 are arranged to contact the underlayer 21. Preferably the bottom flanges of the studs are at least partly in the underlayer. The stud holes may e.g. penetrate into the underlayer 21. Thus, the stud holes preferably penetrate through the cap layer 23 and the intermediate layer 22 into the underlayer.

The tire 1 can comprise an electrically conductive portion 24, such as a rubber member, extending in the radial direction of the tire from the running surface at least to the intermediate layer 22 and/or to the underlayer 21.

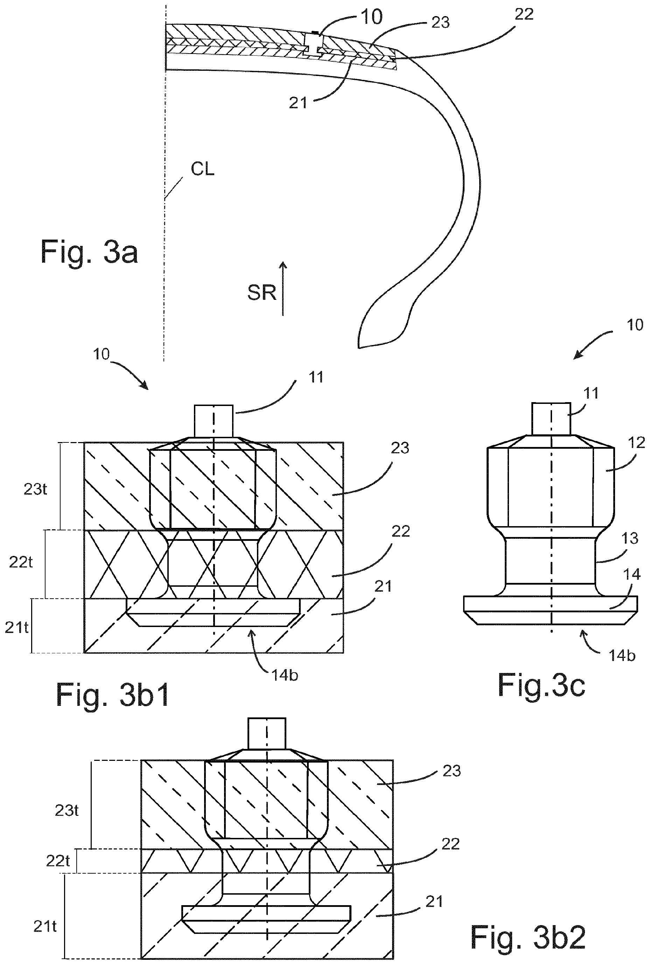

Figures 3a, 3b1-3b2, 4a-5b, and 7a-c show some exemplary locations for the underlayer 21, the intermediate layer 22 and the cap layer 23 of the tire. Thus, the pneumatic tire can comprise

- the underlayer 21,
- the intermediate layer 22, and
- the cap layer 23,

wherein at least part of the intermediate layer is arranged between the cap layer 23 and the underlayer 21.

Referring to Figs 3a and 3b1-3b2, the stud 10 can be arranged in the studded tire 1 to be substantially surrounded by the combination of the underlayer 21, the cap layer 23 and the intermediate layer 22. Technical effect is that the cap layer and the intermediate layer can support the body of the stud and improve stud retention in the tire.

Preferably, the cap layer 23, the underlayer 21 and the intermediate layer 22 together surround at least 90%, more preferably from 93 to 100%, of the body of the stud 10 determined in the direction of axis of rotation of the tire AXR.

The bottom flange of the stud can substantially lie on the underlayer 21, and the waist 13 and the upper flange 12 of the stud can be substantially surrounded by the cap layer and/or the intermediate layer. Technical effect is that the stud can retract when the road surfaces are not frozen, and simultaneously the intermediate layer can support the waist of the stud and improve the holding of the stud in place. Most preferably, the bottom flange 14 of the stud is in the underlayer 21, i.e., the bottom flange 14 is surrounded by the underlayer (see e.g. Figs 3a and 3b1-3b2).

Preferably,

- at least part of a bottom flange 14 of a stud is surrounded by the underlayer 21,
- at least part of a waist 13 of the stud is surrounded by the intermediate layer 22, and
- at least part of the upper flange 12 of the stud is surrounded by the cap layer 23.

Technical effect is to improve stud retention as well as support the stud, and decrease road wear.

## Underlayer

The studded tire 1 comprises the underlayer 21 arranged, at least partially, under the intermediate layer 22. The underlayer 21 can be a circumferential layer. The underlayer 21 can be disposed radially outside an outermost belt of the tire, such as a textile belt 284 or a metal belt 286, 287.

If the tire comprises a textile belt 284, the underlayer 21 can be disposed radially outside the textile belt 284. Technical effect of the textile belt is to restrict expansion from centrifugal forces during high speed driving as well as improve many properties of the tire having the underlayer, including improved handling, grip and aquaplaning for the tire comprising the underlayer.

If the outermost belt of the tire is a metal belt 286, 287, the underlayer 21 can be disposed radially outside the metal belt 286, 287.

By the combined effect of the underlayer and intermediate layer, the dynamic impact of the studs can be particularly well controlled at different ambient temperatures, particularly for tires comprising the at least one metal belt 287, 286 and the at least one textile belt 284.

The underlayer 21 has an inner surface 25 and an outer surface 26. The outer surface 26 of the underlayer faces the tread 20. The inner surface 25 of the underlayer substantially faces the center of the tire 1.

The tire has the underlayer 21 having a hardness which can vary with the ambient temperature. Technical effect is to decrease the road wear of the studded tire but still provide desired winter grip properties in spite of the reduced road wear.

Said underlayer 21 is preferably arranged at least partly below the studs 10. Thus, the studs 10 can be placed at least partly above the underlayer 21. Preferably, the underlayer is arranged to be under each of studs of the winter tire so that the bottom flange of the stud can be pressed against and retract into the underlayer 21. Preferably, a thickness of the underlayer 21 is at least 0.5 mm, determined in the locations of the studs 10.

The stud 10, preferably the bottom flange 14 of the stud, can be in direct contact with the underlayer. Thus, preferably, there is no other material layer between the stud and the underlayer.

The underlayer has an average thickness 21t.

In this specification, the term "average thickness" refers to mathematical average thickness, i.e., mean thickness.

The average thickness 21t of the underlayer can be at least 0.5 mm, such as between 0.5 mm and 7 mm, more preferably at least 1.0 mm, and most preferably at least 1.5 mm. Furthermore, the average thickness 21t of the underlayer can be equal to or less than 7 mm, more preferably equal to or less than 6.5 mm, and most preferably equal to or less than 6 mm. The average thickness can be, for example, between 1 mm and 6 mm. Technical effect is that the ice grip properties of the stud can be substantially improved at cold weather, and moreover, the road wear at warm weather can be substantially reduced. Moreover, the underlayer of the presented thickness can be compressible to reduce road wear, to reduce tire noise, to improve the driving performance of the tire as well as to keep the pin of the stud protruded from the tread to provide the tire with good grip on an icy driving surface.

A thickness of the underlayer determined from a location of a stud, from a bottom 14b of the stud to an inner surface 25 of the underlayer, is preferably at least 0.3 mm, such as between 0.3 mm and 7 mm, more preferably at least 0.6 mm, and most preferably at least 1 mm. Furthermore, the thickness of the underlayer determined from a location of a stud, from a bottom 14b of the stud to an inner surface 25 of the underlayer can be equal to or less than 7 mm, more preferably equal to or less than 6.5 mm, and most preferably equal to or less than 6 mm. Technical effect is that the ice grip properties of the stud can be substantially improved at cold weather and the road wear at warm weather can be substantially reduced.

Preferably, the underlayer 21 contains

- NR (natural rubber) from 0 to 50 phr, preferable from 10 to 40 phr,

    and/or BR (butadiene rubber) from 0 to 30 phr, preferable from 10 to 20 phr,
    and/or IR (synthetic isoprene rubber) from 0 to 50 phr, preferable from 10 to 40 phr,
    so that a total amount of (NR and BR and IR) is from 0 to 70 phr,

- SSBR (solution polymerized styrene-butadiene rubber) from 30 to 100 phr, most preferably from 40 to 70 phr,
- resins from 5 to 40 phr, preferably from 10 to 35 phr, and
- reinforcing fillers from 35 to 80 phr, the reinforcing fillers comprising at least one of carbon black and silica, wherein a combined amount of

- carbon black and
- silica

is preferably from 35 to 80 phr, more preferably from 40 to 60 phr. Technical effect of materials comprising the rubbers comprising at least 30 phr solution polymerized styrene-butadiene rubber together with the reinforcing filler(s) and the resin(s), and preferably also 10 to 70 phr NR, BR, and/or IR, is to provide efficiently the desired tan delta curve for the rubber compound.

The underlayer 21 can further contain additives, such as one or more of oils, antidegradants, ZnO, stearic acid, vulcanization chemicals and sulphur.

As discussed, the reinforcing fillers can comprise

- carbon black, and/or
- silica.

If the reinforcing fillers comprise silica, silane can be added for improving reinforcing efficiency of the silica. Preferably, a content of the silane is equal to or less than 15% by weight, such as between 5 wt.% and 15 wt.%, determined from total weight of the silica in the underlayer. Technical effect it to provide improved dispersion. Furthermore, silane can form bonds between silica and rubber during the vulcanization.

As discussed, the underlayer 21 preferably contains styrene butadiene rubber which is solution-polymerized styrene butadiene rubber SSBR. The underlayer 21 can comprise at least 30 phr of SSBR. Thus, the content of SSBR in the underlayer 21 can be at least 30 phr, preferably at least 35 phr, more preferably at least 40 phr, and most preferably at least 45 phr. Further, the content of SSBR in the underlayer 21 can be equal to or less than 100 phr, preferably equal to or less than 90 phr, more preferably equal to or less than 80 phr, and still more preferably equal to or less than 70 phr. By using said contents of the solution-polymerized styrene butadiene rubber SSBR, stiffness of the underlayer can be efficiently adjusted as desired.

Microstructure of SSBR has an effect on properties of the SSBR. When preparing the underlayer, the vinyl content of the solution-polymerized styrene butadiene rubber is preferably between 33 mol-% and 65 mol-% relative to butadiene, more preferably between 38 mol-% and 61 mol-% relative to butadiene. Furthermore, the styrene content of the styrene butadiene rubber is preferably between 25% and 45% by weight, most preferably between 27% and 40% by weight, wherein the styrene content is expressed in mass % relative to the whole polymer. The contents can be determined by 1H-NMR method in accordance with ISO 21561-1:2015.

This embodiment can provide particularly suitable properties for the underlayer so that stiffening of the underlayer can take place in a controlled manner. Thus, stiffening can take place at a moment determined more precisely in advance.

Preferably, the underlayer contains either NR and SSBR, or BR and SSBR. In these combinations, the technical effect of NR and BR is to improve the elasticity of the underlayer even at cold temperatures. Further, the technical effect of SSBR is to improve stiffness of the mixture.

Thus, in an advantageous embodiment, the underlayer contains

- 10 to 50 phr, most preferable 10 to 40 phr of NR (natural rubber), and
- from 30 phr of SSBR, most preferably from 40 to 70 phr SSBR (solution polymerized styrene-butadiene rubber).

Technical effect of said combination of NR and SSBR is that the position of tan delta peak can be efficiently adjusted as desired, and hardness of the underlayer can increase at a desired temperature, particularly when used together with the reinforcing fillers and resins according to this specification. Furthermore, thanks to this combination, elasticity of the underlayer can be maintained at cold temperatures, further improving properties of the underlayer.

It is to be noted that the natural rubber NR can be replaced with a synthetic isoprene rubber and still maintain the technical effects of the natural rubber. The synthetic isoprene rubber IR is very much like natural rubber but made synthetically. Thus, from 0 to 100 wt.% of the natural rubber NR can be replaced with the synthetic isoprene rubber IR.

In an embodiment, the underlayer advantageously contains

- 10 to 30 phr, most preferable 10-20 phr of polybutadiene rubber, and
- from 30 phr of SSBR, most preferably from 40 to 70 phr of SSBR (solution polymerized styrene-butadiene rubber).

Technical effect is that properties of the studded tire having the underlayer can be particularly improved and position of the tan delta peak of the underlayer can be easily adjusted by using said amounts of polybutadiene rubber and the solution polymerized styrene-butadiene rubber, particularly when used together with the reinforcing fillers and resins according to this specification.

The underlayer 21 can contain reinforcing fillers. A total amount of the reinforcing fillers is preferably more than 30 phr, more preferably at least 33 phr, still more preferably at least 35 phr, and most preferably at least 40 phr, determined from the underlayer 21. Furthermore, the underlayer 21 can comprise equal to or less than 80 phr of reinforcing fillers, preferably equal to or less than 70 phr of reinforcing fillers, still more preferably equal to or less than 60 phr of reinforcing fillers, and most preferably equal to or less than 55 phr of reinforcing fillers. Technical effect of the reinforcing fillers is that the hardness of the underlayer is easier to optimize to a desired level.

The reinforcing fillers are preferably selected from silica and carbon black. The reinforcement may comprise both silica and carbon black. If the reinforcing fillers comprises silica, also silane is preferably added to the mixture. Technical effect of the reinforcing fillers is to improve the strength of the underlayer. Furthermore, the reinforcing fillers can be used to influence the ShA hardness of the underlayer so that the hardness of the underlayer can be more easily optimized to a desired level.

In a non-limiting embodiment, the carbon black is selected from N375 and N234. These carbon blacks are known by a person skilled in the art.

In an embodiment, silica can be selected from: anhydrous silica prepared by dry process and silica prepared by wet process. Among them, hydrous silica prepared by wet process is preferable because it contains a lot of silanol groups.

In a non-limiting embodiment, the silica is selected from high BET and low BET.

Silane coupling agent can be used for silica to be appropriately dispersed during kneading. Preferably, a content of the silane is between 5 wt.% and 15 wt.%, determined from total weight of the silica in the underlayer. Technical effect it to provide improved dispersion. Furthermore, silane can form bonds between silica and rubber during the vulcanization.

The silane coupling agents can be of any type known to those skilled in the art. For example, at least one of bifunctional organosilane and polyorganosiloxane can be used. "Bifunctional" means a compound having a first functional group capable of interacting with silica, e.g., alkoxy, cycloalkoxy or phenoxy group as a leaving group on the silicon atom, and a second functional group capable of interacting with the double bond of elastomer, e.g., -SCN, -SH, -NH$_2$ or -Sx - where x = 2 to 8. The organosilanes can be chosen from the group consisting of polysulphide organosilanes (symmetrical or asymmetrical) such as bis(3-triethoxysilylpropyl) tetrasulphide, abbreviated as TESPT or bis disulphide - (triethoxysilylpropyl), abbreviated as TESPD, polyorganosiloxanes, mercaptosilanes or blocked mercaptosilanes.

The underlayer 21 can contain oil(s). The amount of oils, if used, can be at least 5 phr, more preferably at least 8 phr, and most preferably at least 10 phr. Further, the amount of oils can be equal to or less than 25 phr, preferably equal to or less than 22 phr, and most preferably equal to or less than 20 phr. Technical effect is to increase processability and adjust hardness of the compound.

The oil(s) is/are preferably selected from the group of:

- vegetable oil, such as sunflower oil or rapeseed oil,
- TDAE oil (treated distillate aromatic extract),
- MES oil (mild extracted solvate), and
- RAE oil (residual aromatic extract).

Preferably, said oil contains or consists of at least primarily TDAE oil and/or SRAE oil. Technical effect of oils is to act as process aids and softeners in the manufacturing process.

As discussed, the underlayer 21 can contain one or more resins. A total content of resins is preferably at least 5 phr determined from the underlayer. Technical effect is that the resins can adjust dynamic behavior of the underlayer by shifting and/or broadening the tan delta peak of the rubber compound. Thus, thanks to the resins, position of the tan delta peak can be adjusted in a cost-efficient and controlled manner to a predetermined temperature range.

A total amount of resins can be at least 5 phr, preferably at least 10 phr, more preferably at least 15 phr, and most preferably at least 17 phr, determined from the underlayer. Further, the total amount of resins can be equal to or less than 40 phr, preferably equal to or less than 35 phr, more preferably equal to or less than 30 phr and most preferably equal to or less than 28 phr, determined from the underlayer. Thus, the total amount of resins can be, for example, 5-40 phr, preferably 10-35 phr, and more preferably 15-30 phr, determined from the underlayer. By applying resin, position of tan delta maximum of the underlayer can be raised by a predetermined level so that the hardening of the underlayer can be implemented within a predetermined temperature range. Another technical effect is that by using the preferably ranges, resins affect the rubber compound by shifting and/or broadening the tan delta peak of the rubber compound as desired.

It was noted during experimental tests that properties of tires were particularly improved when the position of tan delta maximum of the underlayer was in a range between 0°C and 10°C, and the position of tan delta maximum of the intermediate layer was less than -30°C. Thus, preferably, the tan delta peak position of the underlayer is in a range between 0°C and 10°C, and the tan delta peak position of the intermediate layer is equal to or less than -30°C.

The resin(s) used for the underlayer can have a glass transition temperature higher than 20 °C, more preferably higher than 30 °C, and most preferably higher than 35 °C. Further, the resin(s) used for the underlayer can have a glass transition temperature of less than 110 °C, preferably less than 85 °C, most preferably less than 70 °C. For example, the resin(s) can have a glass transition temperature from 20 to 100 °C, preferably from 35 to 60 °C. As discussed, Tg for resins can be determined as a peak midpoint by a differential scanning calorimeter (DSC) at a temperature rate of increase of 10°C per minute, according to ASTM D6604 or equivalent.

Preferably, the one or more resins of the underlayer are selected from the following group:

- petroleum hydrocarbon resins,
- aromatic vinyl-based resins,
- phenol-based resins,
- terpene resins,
- terpene phenol resins,
- rosin derived resins and copolymers, and
- mixtures and modifications thereof.

Technical effect is to efficiently adjust the tan delta peak maximum temperature to a desired temperature, i.e., to shift a position of tan delta peak to a desirable range.

Most preferably, the one or more resins of the underlayer are selected from rosin-based resins, terpene-based resins, and pure monomer C9 resins (PMR), i.e., aromatic resins based on aromatic feedstocks that have been highly purified prior to polymerization, including copolymers of styrene and $\alpha$-methylstyrene. Technical effect is to shift tan delta peak position to a desirable temperature range more efficiently.

The underlayer can comprise an aromatic resin. Thus, the resin(s) can contain aromatic groups. In an embodiment, the resins contain more than 4 % aromatic groups, more preferably more than 6 % aromatic groups. However, the aromatic content is preferably less than 60%, more preferably equal to or less than 54%.

Advantageously, for adjusting the tan delta peak of the underlayer to a desired temperature range in a controlled and precise manner, the underlayer comprises:

- solution-polymerized styrene butadiene rubber SSBR, and
- polybutadiene rubber and/or natural rubber, and/or synthetic isoprene rubber,
- reinforcing filler(s), and
- resin(s).

The contents of the materials are preferably in the range defined in this specification.

The underlayer 21 can comprise, primarily comprise, or consist of a material whose tan delta maximum is at a temperature of at least -20°C, for example at least -15°C, preferably at least -12°C, more preferably at least -10°C, or at least -8°C, and most preferably at least -5°C. Furthermore, tan delta maximum of said material can be at a temperature of equal to or less than 20°C, for example not higher than 15°C, preferably not higher than 12°C, more preferably not higher than 10°C, or not higher than 8°C, and most preferably not higher than 5°C. Thus, the hardening of the underlayer can be suitable in view of road wear and winter grip. Technical effect of the preferable ranges is that the hardening of the underlayer can take, more accurately, place at a point optimal in view of road wear and winter grip hence, the stud's dynamic impact of the tire can be controlled easier at different temperatures.

An unvulcanized material of the underlayer can be vulcanized so that sulphur is used as the vulcanizing agent.

**Intermediate layer**

The tire further comprises the intermediate layer 22. The intermediate layer 22 can be a circumferential layer.

The intermediate layer 22 can be arranged between the cap layer 23 and the underlayer 21, at least on locations of the studs. Technical effect is that the intermediate layer improves the stability of the tire and supports the studs 10 therein when the underlayer is softening.

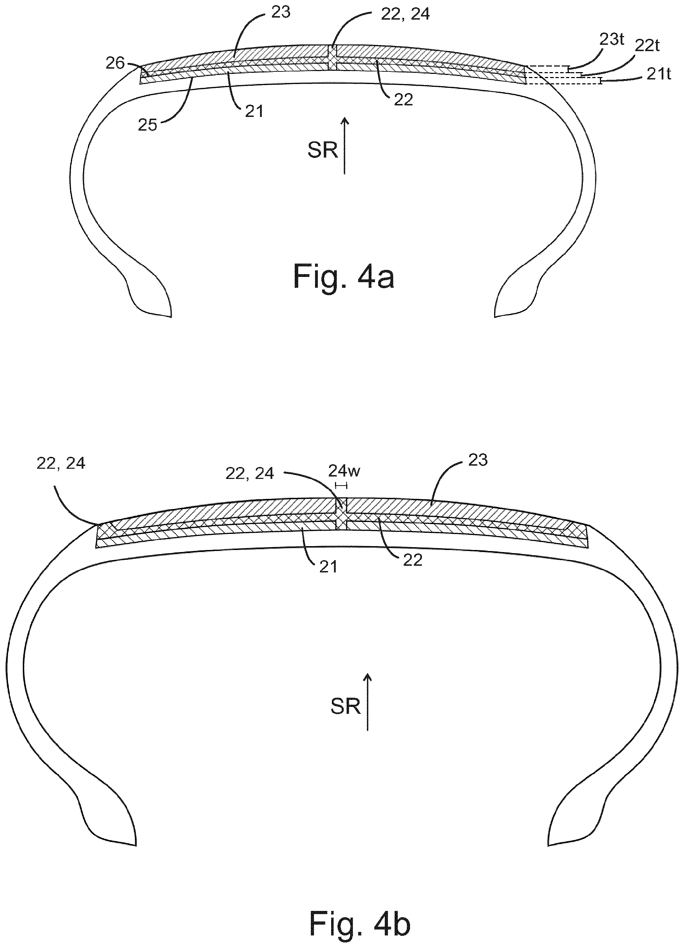

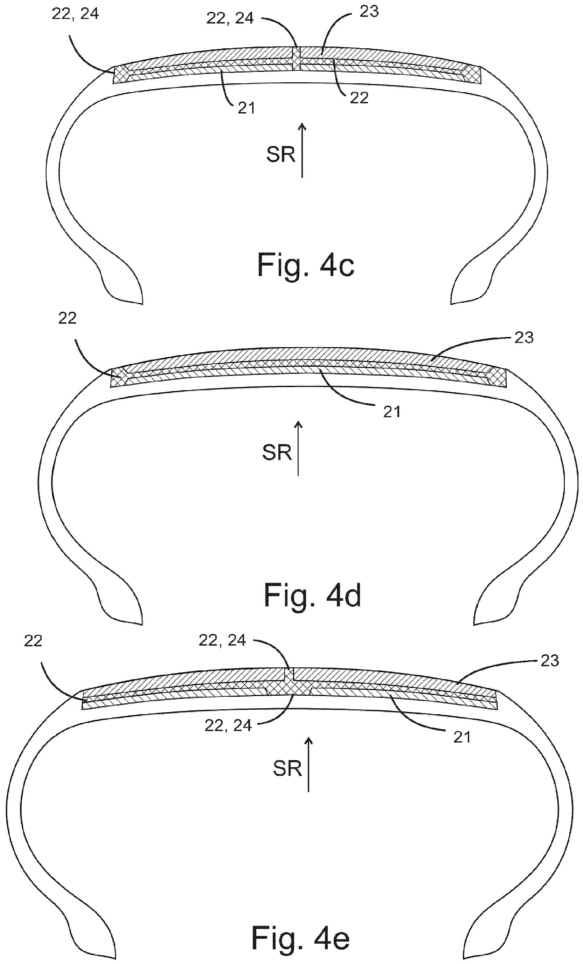

Thus, and referring to Figs 4a-5b and 7a-c, the intermediate layer 22, or at least part of the intermediate layer 22, can be placed between the cap layer 23 and the underlayer 21.

The intermediate layer 22 can support the studs and hence improve driving stability of the tire on a dry road.

An average thickness 22t of the intermediate layer can be at least 0.4 mm and equal to or less than 7 mm, preferably at least 0.6 mm and less than 6.5 mm, more preferably at least 0.7 mm and equal to or less than 6 mm, and most preferably in a range between 0.8 mm and 5 mm. Technical effect is that the intermediate layer can, together with the underlayer, provide the stud with particularly suitable winter grip properties. Thus, the ice grip properties of the tire can be substantially improved. In addition, properties of the tire can be designed as desired more efficiently than in other solutions.

A thickness of the intermediate layer 22, determined at a location wherein the intermediate layer is surrounding a stud, can be at least 0.4 mm and equal to or less than 7 mm, preferably at least 0.5 mm, more preferably at least 0.6 mm and less than 6.5 mm, still more preferably at least 0.7 mm and equal to or less than 6 mm, and most preferably in a range between 0.8 mm and 5 mm. Technical effect is that the intermediate layer can support the stud. Further technical effect is that the intermediate layer can provide particularly suitable handling properties.

As discussed, the intermediate layer 22 is, at least primarily, left in between the cap layer 23 and the underlayer 21. However, the intermediate layer 22 can partially extend to the running surface of the tire, thus forming part of the running surface of the tire.

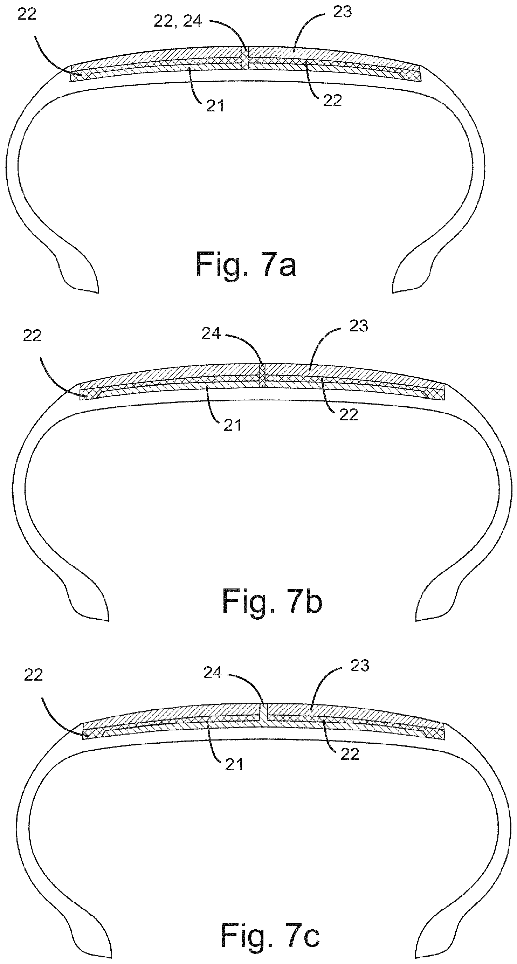

Thus, the intermediate layer can extend to the running surface as shown in Figs 4a-4e and 7a. Preferably, the intermediate layer 22 comprises electrically conductive rubber material which makes the contact with the surface 200, such as a road, thereby completing the electrical path of reduced electrical resistivity between the tire mounting surface and tire running surface. As discussed, the studs are preferably in a contact with the underlayer, the intermediate layer, and the cap layer. Thus, advantageously, such locations wherein the intermediate layer extends to the running surface of the tire are not having the studs.

If the intermediate layer extends to the running surface, the intermediate layer 22 can cover from 0.02% to 25% of the running surface area, preferably from 0.05% to 22.5% of the running surface area, and more preferably from 0.1% to 20% of the running surface area. In an advantageous embodiment, the intermediate layer covers from 0.5% to 8% of the running surface area. The term "running surface area" refers to the ground contacting area of the tread. Technical effect of said range is to improve handling properties of the tire without substantially affecting other properties of the tire, particularly if the intermediate layer extends to the running surface on a middle area of the tread and/or on shoulder areas of the tread. Furthermore, if the intermediate layer is made of electrically conductive material, another technical effect is to improve electrical conductivity while improving handling properties of the tire.

In the embodiment wherein the intermediate layer extends to the running surface, a width 24w of the intermediate layer can be at least 0.5 mm, preferably at least 1 mm, and most preferably at least 1.5 mm, determined from the running surface of the tire. Further, the width of the intermediate layer can be equal to or less than 8 mm, preferably equal to or less than 6 mm, and most preferably equal to or less than 5 mm, determined from the running surface of the tire. The width 24w is measured parallel to the width of the tire (from a first sidewall to a second sidewall), from the outer surface of the tread, (i.e., a running surface of the tire). If the intermediate layer is made of electrically conductive material, the width 24w of the intermediate layer determined from the running surface, can influence the electrical conductivity of the tread portion. Technical effects include decreased electrical resistance through the tread of the tire while improving handling properties of the tire.

Referring to Figs 4a-e, and Figs 7a-c, the intermediate layer can have a greater thickness on shoulder areas and/or on central area, compared to an average thickness of the intermediate layer. Technical effect is to improve handling properties and decrease rolling resistance of the tire.

Referring to Figs 7a to 7c, the intermediate layer can have a greater thickness determined from shoulder areas than an average thickness of the intermediate layer. Technical effect is to improve driving behavior of the tire.

Alternatively or in addition, the intermediate layer can have a greater thickness on a central area of the tread than on the shoulder areas of the tread. In this embodiment, the intermediate layer can extend to the running surface at a central area of the tread, as shown in Figs 4a-4c, 4e and 7a. Technical effect is to improve handling properties of the tire as well as decrease rolling resistance of the tire.

In an embodiment, the intermediate layer has a smaller thickness determined from a central area than determined from shoulder areas. In an embodiment, the intermediate layer has a smaller thickness determined from shoulder areas than determined from a central area.

The intermediate layer can extend to the running surface on shoulder areas of the tread, as shown in Figs 4b-4d and/or extend to the outermost belt layer, as shown in Figs 4c-c and 7a-c. Technical effect is to improve handling properties of the tire as well as decrease rolling resistance of the tire. Another technical effect is that the intermediate layer having the greater thickness on shoulder areas of the tread improve driving behavior of the tire. Another technical effect of said greater thickness on shoulder areas of the tread is to improve braking grip of the winter tire while improving handling properties of the tire.

The intermediate layer can comprise or be made of materials selected from a group comprising or consisting of:

- elastomers, for example, SBR, BR, NR,
- fillers, for example silica and/or carbon black, wherein silane is preferably used together with the silica)
- vulcanization chemicals or curing agents, and

- one or more of resins, sulphur, oils, and antidegradants.

In an embodiment, silica may be selected from: anhydrous silica prepared by dry process and silica prepared by wet process. Among them, hydrous silica prepared by wet process is preferable because it contains a lot of silanol groups. Silane coupling agent can be used for silica to be appropriately dispersed during kneading.

If the fillers comprise silica, silane can be added for improving reinforcing efficiency of the silica. Preferably, the content of the silane is equal or less than 15%, such as from 5% to 15% by weight relative to the amount of silica. Technical effect is to improve dispersion, and during the vulcanization silane forms bond between silica and rubber.

The silane coupling agents can be of any type known to those skilled in the art. For example, at least one of bifunctional organosilane and polyorganosiloxane can be used. "Bifunctional" means a compound having a first functional group capable of interacting with silica, e.g., alkoxy, cycloalkoxy or phenoxy group as a leaving group on the silicon atom, and a second functional group capable of interacting with the double bond of elastomer, e.g., -SCN, -SH, -NH$_2$ or -Sx - where x = 2 to 8. The organosilanes can be chosen from the group consisting of polysulphide organosilanes (symmetrical or asymmetrical) such as bis(3-triethoxysilylpropyl) tetrasulphide, abbreviated as TESPT or bis disulphide - (triethoxysilylpropyl), abbreviated as TESPD, polyorganosiloxanes, mercaptosilanes or blocked mercaptosilanes.

Most preferably, the intermediate layer comprises

- SBR between 0 phr and 50 phr, such as 20 phr and 50 phr,
- BR between 0 phr and 50 phr, preferably between 10 phr and 35 phr,
- NR and/or IR between 20 phr and 100 phr,
  so that a total amount of (BR and NR and IR) is from 50 to 100 phr
- oils between 0 phr and 30 phr,
- resins between 0 phr and 30 phr,
- fillers between 40 phr and 80 phr,
  preferably the filler(s) is/are selected from carbon blacks and silicas,
- preferably, additives such as, ZnO, stearic acid, vulcanization chemicals and sulphur, and
- optionally, antidegradants.

As discussed, in an embodiment, the intermediate layer is made of an electrically conductive rubber material.

Preferably, the intermediate layer 22 comprises a rubber reinforcing carbon black. Technical effect is to increase stiffness of the intermediate layer while improving electrical conductivity through the tread. The intermediate layer can comprise a rubber reinforcing carbon black content of at least 40 phr, preferably at least 50 phr. Thus, the rubber composition(s) of the intermediate layer 22 can be relatively electrically conductive. Thus, the relatively electrically conductive rubber composition of the intermediate layer can e.g., form a part of the electrically conductive path. Thus, a very small electrical resistance can be obtained through the cap layer.

The intermediate layer 22 can comprise one or more oils. The oil(s) can comprise, for example,

- TDAE oil (treated distillate aromatic extract),
- MES oil (mild extracted solvate),
- RAE oil (residual aromatic extract), and
- vegetable oil, such as sunflower oil or rapeseed oil.

Preferably, the oil(s) are selected from TDAE and SRAE. The oils can act in the manufacturing process as process aids and softeners.

A total amount of the oils in the intermediate layer 22 can be from 0 to 30 phr.

The resin(s) of the intermediate layer can be selected from the following group:

- petroleum hydrocarbon resin,
- aromatic vinyl-based resin,
- phenol-based resin,
- terpene resin,
- terpene phenol resin,
- rosin derived resins and copolymers, and
- mixtures and modifications thereof.

A total amount of the resins in the intermediate layer 22 can be from 0 phr to 30 phr, preferably 2 to 20 phr. Technical effect of resins is fine tuning stiffness properties of the intermediate layer.

Thanks to the underlayer and the intermediate layer, properties of the tire can be easier to control so that the underlayer can yield to a particularly suitable extent when the ambient temperature rises, which can further reduce wear of the road surface. Further, by the combined technical effect of the intermediate layer and the underlayer, wear of the road surface under non-frozen conditions can be reduced while the underlayer together with the intermediate layer substantially improves winter grip of the tire on an icy road.

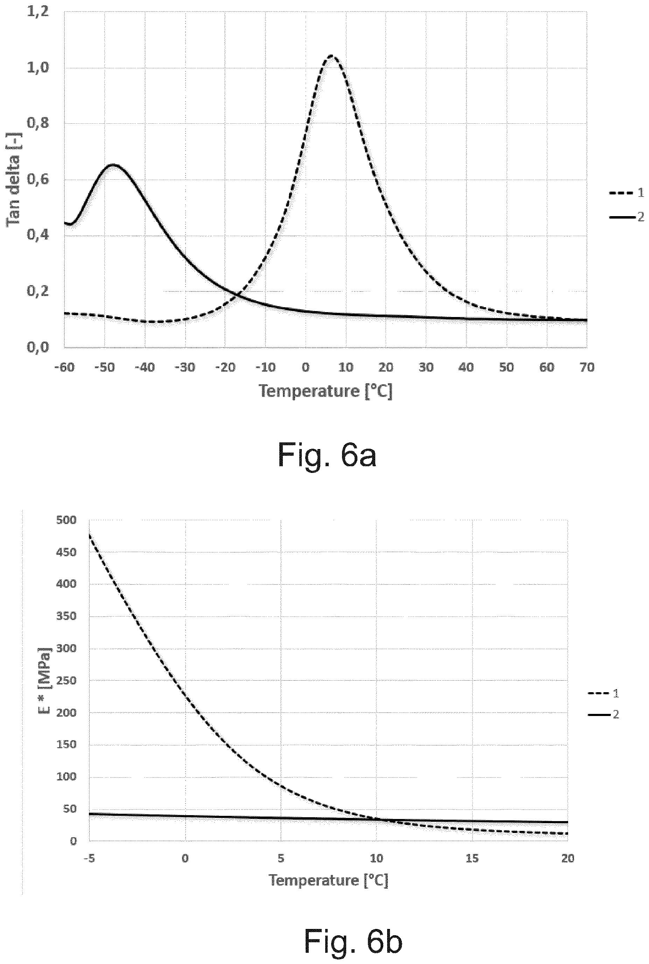

Tan delta maximum of a layer can be determined from a tan delta curve. An example is shown in Fig. 6a, illustrating an example of a tan delta curve of an underlayer (line 1) and an intermediate layer (line 2) as a function of temperature, determined from -60°C to +70 °C.

Preferably, the position of tan delta maximum of the intermediate layer is between -40°C and -60°C degrees. Thus, the position of tan delta maximum of the intermediate layer differs clearly from the position of tan delta maximum of the underlayer that is preferably between -5°C and +15°C.

*Hardness of the underlayer and the intermediate layer*

Hardness of the underlayer preferably differs from a hardness of the intermediate layer at most temperatures. The term hardness (ShA) refers to Shore A hardness.

Hardness (ShA) can be determined from the compound(s).

Hardness (ShA) of the intermediate layer can be configured to be greater than hardness of the underlayer at 22°C. Said difference between the underlayer and the intermediate layer is preferably at least 10%, more preferably from 10% to 60%, and most preferably from 11% to 40% so that underlayer is at least 10% softer than the intermediate layer, determined at 22°C. Technical effect is that the underlayer yields to a suitable extent at said ambient temperature, which reduces wear of the road surface, while the harder intermediate layer supports the tire.

Preferably, hardness (ShA) of the intermediate layer is in a range between 66 ShA and 80 ShA, preferably in a range between 70 ShA and 78 ShA, determined at an ambient temperature of 22°C. Further, hardness (ShA) of the underlayer can be configured to be in a range between 45 ShA and 65 ShA, preferably in a range between 45 ShA and 60 ShA, and most preferably in a range between 45 ShA and 55 ShA, determined at an ambient temperature of +22°C. Thus, the elasticity of the underlayer can be at a particularly appropriate level so that the wear of the road surface can be reduced, while the harder intermediate layer supports the structure of the tire.

In an embodiment, hardness (ShA) difference between the underlayer and the intermediate layer is at least 5%, more preferably from 7% to 60%, still more preferably from 9% to 50%, and most preferably from 10% to 30% so that the underlayer is harder than the intermediate layer, determined at -25°C. Technical effect is that the underlayer and the intermediate layer substantially improves ice grip of the tire on an icy road.

Hardness (ShA) difference between the underlayer and the intermediate layer is preferably at least 5%, more preferably from 10% to 60%, still more preferably from 12% to 50%, and most preferably from 15% to 30% so that the underlayer is harder than the intermediate layer, determined at -25°C. Technical effect is that the underlayer and the intermediate layer substantially improves ice grip of the tire on an icy road.

A softer underlayer material can substantially increase the retraction of the stud into the tire at warmer temperatures and thereby reduce road wear and noise. The greater the difference in hardness of the material at different temperatures, the greater the effect of the underlayer on the grip of the tire in cold weather and on road wear in warm weather. Thus, the effects of the underlayer can be particularly advantageous for both cold and warm conditions.

*Dynamic stiffness of the underlayer and the intermediate layer*

The materials for the underlayer and the intermediate layer can be selected so that a dynamic stiffness of the underlayer differs from a dynamic stiffness of the intermediate layer at most temperatures.

As discussed, the dynamic stiffness can be determined according to standard ISO4664-1:2011 in compression.

The dynamic stiffness of the underlayer, determined at a temperature of 20°C, can be configured to be less than 25 MPa, preferably from 5 to 20 MPa. Further, the dynamic stiffness of the intermediate layer, determined at a temperature of 20°C, can be configured to be at least 25 MPa, preferably at least 27 MPa, and more preferably from 30 to 100 MPa. Technical effect is to decrease road wear while the intermediate layer supports the whole tire and the studs of the tire at the warmer temperature.

The dynamic stiffness of the underlayer, determined at a temperature of 0°C, can be configured to be at least two times the dynamic stiffness of the underlayer at a temperature of 20°C. Further, the dynamic stiffness of the intermediate layer, determined at a temperature of 0°C, can be configured to be from 1 to 1.5 times, preferably from 1.1 to 1.4 times, the dynamic stiffness of the intermediate layer at a temperature of 20°C. Technical effect is that the winter grip properties of the winter tire can be substantially improved while the intermediate layer supports the whole tire and the studs of the tire at warmer temperatures.

The dynamic stiffness of the underlayer can be at least 100% higher, preferably at least 150% higher than the dynamic stiffness of the intermediate layer at a temperature of 0°C. Technical effect is that the ice grip properties of the winter tire can be substantially improved at 0°C. The dynamic stiffness of the underlayer may further be equal to or less than 1000 % higher, such as equal to or less than 900% higher, preferably equal to or less than 580% higher than the dynamic stiffness of the intermediate layer at a temperature of 0°C.

Furthermore, the dynamic stiffness of the intermediate layer can be higher than the dynamic stiffness of the underlayer at a temperature of at least 5 °C, such as at a temperature of at least 7 °C. In a particularly advantageous embodiments, the dynamic stiffness of the intermediate layer is higher than the dynamic stiffness of the underlayer at temperatures from 10 °C to 20 °C. Technical effect is to reduce road wear while improving handling properties of the tire. Further technical effect is that the intermediate layer effectively supports the stud.

The dynamic stiffness of the underlayer at -25°C can be at least 20 times the dynamic stiffness of the underlayer at +20°C. Thus, the grip properties of the winter tire can be substantially improved, and, for example, the braking distance needed by the winter tire under certain conditions can be substantially reduced.

The dynamic stiffness (E*, MPa) of the underlayer can be

- lower than 25 MPa at an ambient temperature of 20°C,
- in the range from 25 to 500 MPa, preferably from 40 to 400 MPa, at an ambient temperature of 0°C, and
- at least 500 MPa at an ambient temperature of -30°C.

The change in the dynamic stiffness of the underlayer upon a decrease in the temperature can have a greater impact on the grip of the tire in winter than the change in the hardness of the material upon a decrease in the temperature. For the above-mentioned dynamic stiffness values, the adjustment of the stud's dynamic impact of the tire at different temperatures can be more controllable, and the grip properties of the winter tire can be better optimized for different temperatures. Thanks to the above-mentioned dynamic stiffness, for example the braking distance on an icy road can be substantially reduced.

In a preferred example, for optimizing the grip properties of the tire in winter,

(A) the hardness (ShA) of the underlayer can be

- lower than 60 ShA and preferably lower than 55 ShA at 20°C, and
- preferably at least 60 ShA, more preferably at least 65 ShA, at 0°C, and
- higher than 75 ShA at -30°C;

and furthermore,
(B) the dynamic stiffness of the underlayer can be

- lower than 25 MPa at an ambient temperature of 20°C,
- between 25 MPa and 500 MPa at an ambient temperature of 0°C, and
- at least 500 MPa at an ambient temperature of -30°C.

During the experimental tests, it was noted that properties of tires were particularly improved when a cross point of stiffness curves of the underlayer and the intermediate layer (shown in Fig. 6b) was in a range between +5°C and 20°C, and particularly when the cross point of stiffness curves was in a range between +7°C and 13°C.

Thus, advantageously, a cross point of stiffness curves of the underlayer and the intermediate layer is in a range between +5°C and 20°C, more preferably in a range between +7°C and 13°C.

In an advantageous embodiment, the dynamic stiffness of the underlayer is higher than the dynamic stiffness of the intermediate layer at temperatures of less than 5 °C, but the dynamic stiffness of the intermediate layer is higher than the dynamic stiffness of the underlayer at temperatures from 15 °C to 20 °C. Technical effect is to substantially reduce road wear while improving handling properties of the tire.

**Cap layer**

As discussed, the cap layer 23 forms at least part of the outer surface of the tire, the intermediate layer 22 can be arranged underneath the cap layer 23, and the underlayer 21 can be arranged underneath the intermediate layer 22.

The cap layer 23 forms at least part of the outer surface of the tire, preferably at least 75% of a total surface area of the tread, more preferably from 75% to 99.98%, still more preferably from 77.5% to 99.95%, and most preferably from 80% to 99% of the total surface area of the tread.

A medium thickness 23t of the cap layer can be in a range between 2 mm and 20 mm, preferably from 2.5 mm to 15 mm, and most preferably from 3 mm to 12 mm. Technical effect is to provide a desired thickness for the tread so that winter grip properties of the tire can be maintained at a desired level even after the tread has started to wear.

The cap layer can be made of a conventional tread rubber of winter tires. The cap layer can comprise or consist of a cap rubber, known by a person skilled in the art. The cap layer can comprise, e.g., NR, BR, SBR, carbon black, silica, resin, oil etc., as known by a person skilled in the art.

The hardness of the cap layer 23 of the studded tire can range, for example, from 48 to 60 ShA, more preferably from 50 to 58 ShA, and most preferably from 52 to 57 ShA, measured at 22°C. Technical effect is that the performance characteristics of the tire are particularly good for winter driving conditions. Further, the grip properties of such a tire can improve when the ambient temperature is above the freezing point.

*Electrical conductivity*

When the tire 1 is used, a path of increased electrical conductivity can be provided from the first bead region to the surface 200 at least partly via the tread. Thus, preferably, the tire has a path of increased electrical conductivity through the tread.

The intermediate layer can comprise electrically conductive rubber material. In this embodiment, the intermediate layer can extend to the running surface of the tire, as shown in Figs 4a-e and 7a. Technical effect is to improve electrical conductivity and handling properties of the tire without substantially affecting other properties of the tire, while supporting the studs on the underlayer.

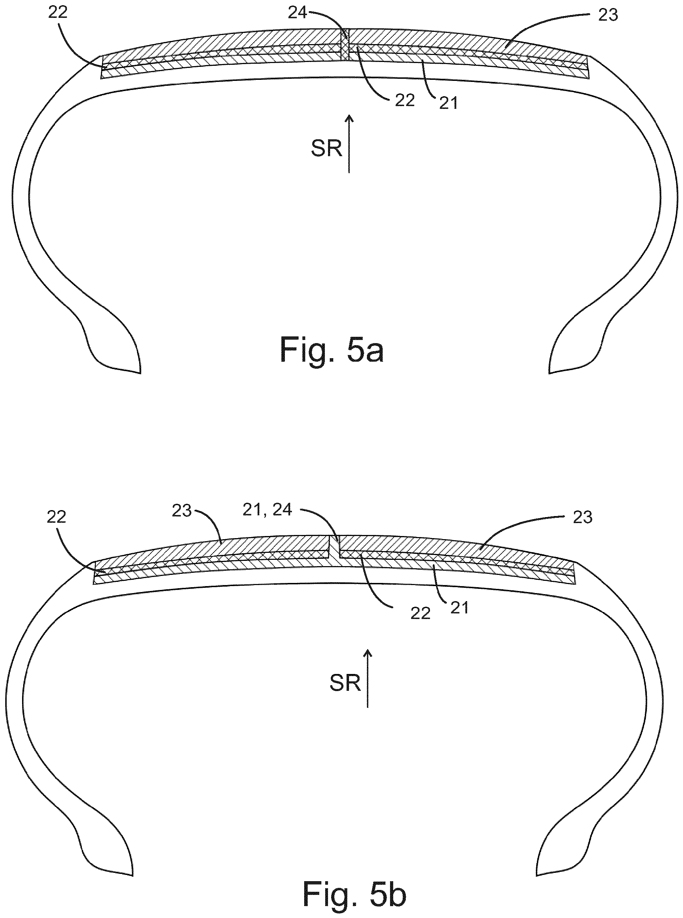

However, in an embodiment, the intermediate layer is not extending to the running surface. In this embodiment, the discharge of static electricity of the tire to the ground can be arranged in another way. Some alternative solutions are presented in Figs 5a-b and 7b-c.

The underlayer can comprise electrically conductive rubber material. In this embodiment, the underlayer can extend to the running surface of the tire, as shown in Figs 5b and 7c, providing the path of increased electrical conductivity through the tread.

In addition, on alternatively to the previously discussed alternatives, the tire can comprise a rubber member comprising electrically conductive rubber material. The rubber member can form a part of the outer surface of the tire.

Figs 5a and 7b disclose an embodiment wherein the electrical conductivity is improved by using the rubber member. The rubber member can be an electrically conductive portion 24 extending through the cap layer 23 to the outer surface of the tread.

The electrically conductive rubber material, and thus the electrically conductive portion 24, such as the intermediate layer extending to the running surface of the tire, can have a desired conductivity for obtaining a path of increased electrical conductivity from the bead region to the running surface of the tread.

Thanks to the electrically conductive portion 24, resistivity from the bead region to the running surface of the tire can be less than 500 MΩ by using 500 VDC, determined according to standard W.d.K 110 (Measurement of the Electrical Resistance of Tires).

The electrically conductive rubber material can form from 0.02% to 25% of the running surface area, preferably from 0.05% to 22.5% of the running surface area, and more preferably from 0.1% to 20% of the running surface area of the tire. Thus, it is possible to improve conductivity through the tread without affecting too much other properties of the tire.

Thus, the electrically conductive rubber material can be arranged to discharge static electricity of the tire to the ground. Thanks to the electrically conductive rubber material extending to the running surface of the tire, a resistance through the whole tire (from the bead region to the running surface), can be substantially low. The smaller the resistance, the better for the tire.

*Studs*

As discussed, the tread 20 is provided with studs 10. Each stud can be arranged in a stud hole provided in the tread.

Each stud can be arranged in a place wherein the stud hole is surrounded by the underlayer, the intermediate layer, and the cap layer.

Studs can be installed to the tire by embedding the bottom flange and the waist of a stud into a hole for a stud, formed in the tire. The bottom flange of the stud is preferably placed in the bottom area of the hole for the stud, and the waist extends from it outwards, towards the surface of the tire. Thus, a stud 10 can be placed on said underlayer so that it is partly embedded in the underlayer. Further, the intermediate layer can support the stud 10.

The outer surface of the underlayer can be arranged, at least partly, below the bottom flange of the stud so that the bottom of the stud retracts partly into the underlayer during the use of the studded tire. In this embodiment, the properties of the studded tire can be more predictable. Furthermore, the stud can efficiently retract into the underlayer when in contact with the road, so that the damping effect of the underlayer can be more pronounced.

The stud 10 can comprise a bottom flange 14 of the stud 10 arranged to be placed in the bottom section of a hole for a stud. The body of the stud can comprise a bottom flange 14, a waist 13 extending away from the bottom flange 14, and an upper flange 12. Furthermore, the stud typically comprises a stud pin 11 fastened to the body.

The pin 11 of the stud may be made of a material different from said body of the stud. The pin of the stud may be made of, for example, hard metal or hard ceramic.

The body of the stud 10 may be made, for example, by cold working of the shape from a circular wire preform which can be forced to a desired shape in a number of different steps. A hard metal pin, if used, can be made, for example, by compressing a preform from hard metal powder together with a binder, and by sintering it at a high temperature. Such a stud is assembled, for example, by pressing the hard metal pin into the stud body, whereby a strong friction joint is formed between them. The stud may be particularly suitable for use with such a pin of a stud that is made of a hard metal or ceramic based material.

The total length of the stud may be, for example, between 9 mm and 15 mm. For example for cars, the total length of the stud may be e.g., between 9 and 12 mm. The length of the stud can affect some properties of the stud and the tire.

The stud may comprise a bottom flange of the stud, whose cross-sectional dimension, such as a diameter or a diagonal, can be at least 3.5 mm and not greater than 10 mm, preferably between 4 and 9 mm and most preferably between 5 and 8.5 mm. The diameter of the bottom flange is measured at the greatest dimension of the cross-section of the bottom flange. Said diameter of the bottom flange can improve the controllability of the dynamic impact. Furthermore, such an area of the bottom flange of the stud can be particularly advantageous for use in combination with an underlayer.

In an example, the pin of a stud can be arranged to protrude not more than 1.7 mm, preferably not more than 1.5 mm and still more preferably not more than 1.2 mm, and most preferably equal to or less than 1 mm, from the tread of the tire at an ambient temperature of 20°C, determined so that the stud to be measured is not in contact with a surface 200.

The surface area of the cross-section of the pin of the stud may range from 1.5 mm$^2$ to 7.0 mm$^2$, from 2 mm$^2$ to 6 mm$^2$ more preferably from 3.2 mm$^2$ to 5 mm$^2$. Such an area of the pin of the stud may be particularly advantageous for use in combination with the underlayer and the intermediate layer.

The bottom of the stud may be provided with an air space which can enable better retraction of the stud into the tread when in contact with a road, reducing the dynamic impact of the stud, the dynamic impact, and road wear. In an example, the underlayer can, in the rest position of the stud, touch e.g., 60 to 100% of the bottom area of the stud, or e.g., 70 to 90 % of the bottom area of the stud. In such a case, the advantages of the underlayer can be pronounced. For example, the control of the grip properties of the tire can be improved by using an air space arranged at the bottom of the stud, as well as a underlayer which is contact with said section of the bottom area of the stud.

Thus, in an example, the lower surface of the bottom flange of the stud 10 can be provided with a notch which forms an air space either between the bottom of the stud 10 and the underlayer 21. Said notch may provide the underlayer 21 with space to expand, whereby the properties of the stud can be more controllable at various temperatures.

The grip of the tire can be improved by using sufficiently many studs. The grip of the tire can be improved by using sufficiently many studs on both sides of the circumferential central line CL.

The tread 20 can have a circumference. The circumference can be measured along the circumferential central line CL. The circumferential central line CL is arranged in an equatorial plane EP of the tire 1. The equatorial plane EP of the tire 1 divides the tire to two equally large parts.

The tread 20 can be provided with a total number N10 of studs 10.

A ratio (N10/(20W×CL)) of the total number of the studs N10 to the width of the tread 20W and the circumference of the tread CL can be more than 2.8 pieces per square-decimeter (pcs/dm$^2$), preferably from 2.8 to 8.8 pcs/dm$^2$, more preferably from 3.8 to 7.8 pcs/dm$^{2,}$ and most preferably from 4.4 to 6.5 pieces per square-decimeter.

Thus, in an embodiment,

8.8 pcs/dm$^2$ ≥ N10/(20W×CL) ≥ 2.8 pcs/dm$^2$
wherein
N10 is a total number of studs in the tire,
20W is the width of the tread (dm), and
CL is circumference of the tire (dm, measured along the circumferential central line).

Technical effect is that said number is particularly advantageous for tires having the intermediate layer and the underlayer for improving ice grip and reducing road wear.

The width 20W of the tread can be determined as follows:
The width 20W (i.e., that of the tread) may be equal to the reference tread width as defined in the ETRTO standards manual 2023 (see Design Guide, Page PC.7). In accordance with the definitions therein, the reference tread width C is calculatable as

$$C = (1.075 - 0.005ar)s^{1.001}$$

Herein s is the Section Width (defined below), i.e., the width of the tyre, and *ar* is the nominal aspect ratio, which is readable from the size marking w/hRr, the "h" indicating the aspect ratio. Thus, the width 20W of the tread 20 may equal the value C as calculatable with the equation given above, wherein s equals the width of the tyre.

Within this description, the width of the tyre, refers to the "Section Width" as defined in the Standards Manual 2023 of the European Tyre and Rim Technical Organization (ETRTO).

Correspondingly, the Section Width (see Table 2 below), i.e., the width of the tyre as defined herein (and in the ETRTO standards manual) is the linear distance between the outsides of the sidewalls of an inflated tyre excluding elevations due to labelling (markings), decoration, or protective bands or ribs.

In practice, the tyre width is related to the size marking shown on the tyre. In general, the size marking is shown on a tyre as w/hRr, wherein w denotes a width, h an aspect ratio and r a radius. According to the ETRTO standards manual, typical size markings refer to Design Width (i.e., the width W200 of the tyre 200) and an overall diameter as shown in the Table 1 below:

It is noted that Table 2 shows only some examples. A tyre may have a different size, in particular another aspect ratio than 55.

Table 2: Tyre width and diameter indicated by a size marking of a tyre.

| Size | Section Width (mm) | Overall Diameter (mm) | Size | Section Width (mm) | Overall Diameter (mm) | Size | Section Width (mm) | Overall Diameter (mm) |
|---|---|---|---|---|---|---|---|---|
| 145/55R16 | 150 | 566 | 205/55R15 | 214 | 607 | 255/55R16 | 265 | 686 |
| 155/55R14 | 162 | 526 | 205/55R16 | 214 | 632 | 255/55R17 | 265 | 712 |
| 155/55R16 | 162 | 576 | 205/55R17 | 214 | 658 | 255/55R18 | 265 | 737 |
| 165/55R14 | 170 | 538 | 205/55R18 | 214 | 683 | 255/55R19 | 265 | 763 |
| 165/55R15 | 170 | 563 | 205/55R19 | 214 | 709 | 255/55R20 | 265 | 788 |
| 175/55R15 | 182 | 573 | 215/55R16 | 226 | 642 | 255/55R21 | 265 | 813 |
| 175/55R16 | 182 | 598 | 215/55R17 | 226 | 668 | 265/55R18 | 277 | 749 |
| 175/55R17 | 182 | 624 | 215/55R18 | 226 | 693 | 265/55R19 | 277 | 775 |
| 175/55R18 | 182 | 649 | 215/55R19 | 226 | 719 | 265/55R20 | 277 | 800 |
| 175/55R20 | 182 | 700 | 225/55R16 | 233 | 654 | 275/55R15 | 284 | 683 |
| 185/55R14 | 195 | 560 | 225/55R17 | 233 | 680 | 275/55R16 | 284 | 708 |
| 185/55R15 | 195 | 585 | 225/55R18 | 233 | 705 | 275/55R17 | 284 | 734 |
| 185/55R16 | 195 | 610 | 225/55R19 | 233 | 731 | 275/55R18 | 284 | 759 |
| 195/55R15 | 201 | 595 | 235/55R16 | 245 | 664 | 275/55R19 | 284 | 785 |
| 195/55R16 | 201 | 620 | 235/55R17 | 245 | 690 | 275/55R20 | 284 | 810 |
| 195/55R17 | 201 | 646 | 235/55R18 | 245 | 715 | 275/55R21 | 284 | 835 |
| 195/55R18 | 201 | 671 | 235/55R19 | 245 | 741 | 285/55R18 | 297 | 771 |
| 195/55R19 | 201 | 697 | 235/55R20 | 245 | 766 | 285/55R19 | 297 | 797 |
| 195/55R20 | 201 | 722 | 245/55R16 | 253 | 676 | 305/55R20 | 316 | 855 |
| 195/55R21 | 201 | 747 | 245/55R17 | 253 | 702 | 325/55R22 | 336 | 917 |
| | | | 245/55R18 | 253 | 727 | | | |
| | | | 245/55R19 | 253 | 753 | | | |

## Dynamic impact of the stud

The bottom flange 14 of the stud, together with the underlayer 21, and the intermediate layer 22, can substantially determine the impact of the stud to the road.

When the outdoor temperature is above the freezing point, the relatively soft material of the underlayer can allow the stud to retract deeper inside the tire tread, reducing stud protrusion. Thus, the stud can also wear the road to a lesser extent. Moreover, noise caused by the tire can be substantially reduced. Furthermore, the harder material of the intermediate layer can support the stud, further improving properties of the studded tire. When the outdoor temperature decreases so that ice or snow may build up on the road, the material of the underlayer 21 can substantially harden, whereby the stud can efficiently protrude into the icy surface, improving the ice grip properties of the tire.

The shape of the bottom flange of the stud together with the underlayer 21 and the intermediate layer 22 can be designed to increase the dynamic impact of the stud in cold temperatures. Preferably, the underlayer 21 is arranged, at least primarily, under the intermediate layer, between the bottom flange of the stud and the reinforcements of the tire. In this context, the reinforcements of the tire refer to plies having cords and belts, such as metal belts (e.g., steel belts) and textile belts (e.g., nylon belts), of the tire.

The underlayer can be arranged so that the stud 10 is, in road contact, pressed against the underlayer 21 while the intermediate layer 22 supports the body of the stud 10 during use. Technical effect is to have an effective impact on the grip properties of the tire on an icy road.

The stud can be in direct contact with the outer surface 26 of the underlayer 21. Thus, the bottom flange of the stud can be arranged in connection with the outer surface of the underlayer 21 so that the stud is pressed against the underlayer 21 during driving on a road. If the underlayer is made of a relatively hard material, a relatively great force is needed for pressing the stud substantially into the tire during driving on a road. Such a great dynamic impact can cause substantial wear of the road surface, as well as increased tire noise. Therefore, when driving on a non-frozen road surface, the underlayer under the stud would preferably be a relatively soft material, whereby a lesser force is needed for pressing the pin of the stud substantially into the tire.

The underlayer can comprise or consist of a material which is soft at room temperature and thereby reduces wear of the road surface caused by the tire under non-frozen conditions. Hardening of the underlayer can increase the dynamic impact of the stud, because the stud thus cannot substantially retract into the tire, whereby the penetration of the stud into the ice is greater and the grip of the tire can be significantly better. Under warm conditions, the underlayer can substantially soften, whereby the softening underlayer can allow the retraction of the stud body into the tire, whereby it can reduce the dynamic impact of the stud and thereby reduce the wear of the road.

## Manufacturing method

The rubber compositions can be manufactured by a known method. For example, they can be manufactured by kneading each of the previously described components using a rubber kneading apparatus.

Further, the tire can be manufactured by a known method. For example, the tire can be manufactured by first forming an unvulcanized tire using a conventional method, followed by heating, and pressurizing this unvulcanized tire in a vulcanization press.

The curing can be a vulcanization process, wherein the preform is heated in a temperature typically less than 200°C, such as in the range of 150 to 200°C.

During the vulcanizing, sulphur containing compounds present in the rubber-based components undergo cross-linking reactions. The formed cross-linked structure bonds the tyre components firmly together. The duration of the vulcanization may vary. Passenger car tires are typically cured from few minutes up to half an hour, such as in the range of 5 to 30 minutes.

Thus, a method for manufacturing a studded pneumatic tire can comprise steps of

- forming an annular carcass comprising one or more plies,
- forming an annular belt comprising

  - metal belt(s),
  - optionally at least one textile belt,
  - the underlayer,
  - the intermediate layer, and
  - the cap layer,

- arranging the annular belt onto the annular carcass to form a preform,
- vulcanizing the preform, and

-    installing studs.

Stud holes can be formed e.g. during the vulcanizing step, and the studs can be installed into the stud holes.

**Experimental tests**

Several studded pneumatic tires were manufactured, and their properties were determined during experimental tests.

***Example 1 - Preparation of the underlayer and the intermediate layer***

Several studded tires comprising the underlayer and the intermediate layer according to this specification were manufactured. The amounts of raw materials were as disclosed in the specification.

Table 3 discloses, as an example, raw materials of the underlayer and the intermediate layer for one of the manufactured tires.

Table 3: Materials of an underlayer and an intermediate layer for one of the manufactured tires

| Raw materials | Underlayer (phr) | Intermediate layer (phr) |
|---|---|---|
| SSBR (58% vinyl, 34% styrene) | 50 | - |
| ESBR (16% vinyl, 23% styrene) | - | 40 |
| NR | 30 | 40 |
| BR | 20 | 20 |
| Oil (TDAE) | 20 | 9 |
| Resin, Tg 39 °C | 30 | - |
| Carbon black, N375 | 40 | 60 |
| Zinc oxide (ZnO) | 3 | 3 |
| Stearic acid | 2 | 1 |
| 6PPD (N-(1 ,3-Dimethylbutyl)-N'-phenyl-p-phenylenediamine) | 1 | 1 |
| TMQ (2,2,4-Trimethyl-1 ,2-dihydroquinoline) | 1 | 1 |
| Sulphur | 1.40 | 1 |
| CBS (N-Cyclohexyl-2-benzothiazole sulfenamide) | 1.40 | 2.90 |
| ZBEC (Zinc bis(dibenzyldithiocarbamate)) | 0.25 | - |

The rubber mixtures were obtained by means of a stepwise mixing process. A 2L-internal mixer (Krupp Elastomertechnik GK 1,5 laboratory mixer) was used to add the compounds.

In the first step, the polymers were added and mixed for 40 seconds. In the second step, part of the carbon black and chemicals were added and mixed for 60 seconds. In the third step, the rest of the carbon black and oil were added and mixed for 90 seconds or temperature in mixing chamber received 150 degrees.

The final step with curing chemicals was performed at 95°C for 50 seconds.

DMTA samples were vulcanized at 150°C by using a pressure of 150 bar. The optimum vulcanization time of t90 (at 150°C) was determined with a moving die rheometer according to ASTM D5289/1995. A vulcanization time of t90 plus 5 min was used for the samples.

***Example 2 - Measurements from the underlayer and the intermediate layer***

Tan delta max, DMTA at 20°C, at -20°C and at -25°C, and hardness (ShA) at 22°C were determined from the obtained underlayer and intermediate compounds.

DMTA measurements of Table 4 were done by using tension mode according to standard ISO 4664-1:2011, by using a temperature range from -60°C to 70°C, 10 Hz, static strain 3%, and dynamic strain $\pm$ 0,2 %. For these measurements, samples had a thickness of 2.4 mm and a width of 6.0 mm.

Table 4: DMTA measurements

| Properties | Underlayer | Intermediate layer |
|---|---|---|
| Position of Tan $\delta$ maximum (Temperature (°C)) | 3 | -47 |
| E* (20 °C) (MPa) | 6 | 17 |
| E* (-20°C) (MPa) | 411 | 34 |
| E*(-25 °C) (MPa) | 566 | 41 |
| Hardness (22 °C) (ShA) | 48 | 68 |

As can be seen from Table 4, the underlayer as well as the intermediate layer had the desired properties for being able to reduce road wear while improving stability of tires.

### Example 3 - Ice grip, handling and road wear

Ice grip and handling properties as well as road wear were determined from the manufactured studded tires. The same properties were also measured from traditional studded tires as well as from studded tires having the underlayer without the intermediate layer. Thus, properties of the tire according to this specification were compared with properties of traditional studded winter tires and studded tires having the underlayer without the intermediate layer.

First, said properties of traditional studded winter tire were determined, after which those measured values were determined as representing index values of 100. Then, the same properties of other tires were first determined and then compared to the properties of the traditional studded winter tires. Finally, an index was given for each property for each tire, based on the comparation.

At indexes, higher means better performance property. Thus, for example, higher road wear index means reduced road wear. Further, higher ice grip index means better ice grip properties, and the higher handling index means better handling properties.

As can be seen from Table 5, tires having the underlayer without the intermediate layer had strongly improved ice grip properties as well as reduced road wear. However, those tires without the intermediate layer had decreased handling properties as well as worse rolling resistance.

Surprisingly, the tires having both, the intermediate layer and the underlayer according to this specification, not only had strongly improved ice grip properties and strongly reduced road wear, but also slightly improved handling properties, compared to conventional studded tires (without the underlayer). Furthermore, the rolling resistance was at the substantially same level compared to the conventional studded tires without the underlayer.

Table 5: Performance properties

| | Ice grip index | Handling index | Road wear index | Rolling resistance index |
|---|---|---|---|---|
| Traditional studded winter tire | 100 | 100 | 100 | 100 |
| Studded tire with underlayer without intermediate layer | 109 | 94 | 127 | 93 |
| Studded tire with underlayer and intermediate layer | 108 | 102 | 122 | 98 |

Thus, according to the experimental tests, the tires comprising the intermediate layer and the underlayer according to this specification had optimized properties so that the tires comprising the intermediate layer and the underlayer had better (more desired) properties than conventional tires.

Furthermore, the tires comprising the intermediate layer and the underlayer according to this specification had better (more desired) properties than the tires with an underlayer but without the intermediate layer.

### Example 4 - A tan delta curve of an underlayer and an intermediate layer

The behavior of the underlayer in relation to the ambient temperature was examined and compared with the intermediate layer.

The tan delta curve was determined according to the method disclosed in this specification from cylindric samples having dimensions of diameter 10 mm × height 10 mm by using a temperature range from -60°C to 70°C, a heating rate of 2°K/min and a 10Hz frequency. Standard used in the determination was ISO 4664-1:2011.

The tan delta curves were determined from the rubber components. Figure 6a shows the determined tan delta curves of an underlayer (line 1) and an intermediate layer (line 2) as a function of temperature from -60°C to 70°C.

As shown in Fig. 6a, the position of tan delta maximum of the intermediate layer was very low, i.e., between -40°C and -60°C degrees. The tan delta curve of the intermediate layer showed substantially constant values from 0°C to 70°C. On the contrary, the position of tan delta maximum of the underlayer was between -5°C and +20°C, particularly between 0°C and +12°C.

Thus, the Fig. 6a shows that while the peak position of the underlayer was between -5°C and +20°C, the values of the tan delta curve of the intermediate layer remained almost constant at this temperature range and the values were significantly changed only for temperatures of below -30°C.

During the experimental tests it was noted that properties of tires were particularly improved when the position of tan delta maximum of the underlayer was in a range between 0°C and 10°C, and the position of tan delta maximum of the intermediate layer was less than -30°C.

Thus, the peak positions of the prepared compounds were at the desired levels.

**Example 5** - **Dynamic stiffness of the underlayer and the intermediate layer as a function of temperature**

The behavior of the underlayer compound in relation to the ambient temperature was examined and compared with the intermediate layer compound. The values were determined according to the method disclosed in this specification.

Figure 6b shows the measured values for the underlayer (line 1) and the intermediate layer (line 2) as a function of temperatures from -5°C to +20°C.

The graph shows that the dynamic stiffness values of the underlayer were significantly changed in the temperature range between -5°C and +20°C. When the ambient temperature decreased to below 5°C, the measured stiffness values strongly increased. Therefore, the underlayer is able to support the studs and strongly improve ice grip properties of the tire when the ambient temperature is below 5°C.

Furthermore, the measured dynamic stiffness values of the underlayer were below measured values of the intermediate layer when the temperature was more than +10°C.

The stiffness of the intermediate layer material, in turn, remained almost constant in the temperature range from -5°C and +20°C. Thus, the intermediate layer is able to improve stability and handling properties of the tire when the underlayer softens, allowing the studs to retract into the tread.

During the experimental tests, it was noted that properties of studded tires were particularly improved when a cross point of stiffness curves of the underlayer and the intermediate layer (shown in Fig. 6b) was in a range between +5°C and 20°C, and particularly when the cross point of stiffness curves was in a range between +7°C and 15°C.

***Example 6 - Hardness measurements from tires***

For measuring hardness from tires, tire cut samples were taken from different tires comprising the underlayer and the intermediate layer according to this specification.

The samples to be measured were taken from the tire cut samples. For measurements, each sample was attached to a support for stabilizing the samples during measurements. For precise measurements, the samples were attached to the support by using glue. Thus, the samples were firmly attached to the support during the hardness measurements.

Thickness of each sample was 5 mm. The samples were tempered (according to Table 1) before measuring the hardness.

Hardness (ShA) at 22°C and -25°C were determined from the obtained samples. Test results are shown in Tables 6 and 7. The ShA-hardness of each sample was determined by placing the sample to be measured under a durometer. For measurements, each sample was moved so that a piston of the durometer tested a predetermined test area of the sample.

Table 6: Hardness measurements from tires, measured at 22°C

| measurements at 22°C | sample 1: an example of an intermediate layer | sample 2: an example of an intermediate layer | sample 3: an example of an underlayer |
|---|---|---|---|
| 1 | 64.1 | 67.4 | 45.9 |

(continued)

| measurements at 22°C | sample 1: an example of an intermediate layer | sample 2: an example of an intermediate layer | sample 3: an example of an underlayer |
|---|---|---|---|
| 2 | 63.8 | 68.2 | 45.2 |
| 3 | 63.5 | 67.1 | 45.3 |
| 4 | 61.1 | 69 | 44.6 |
| 5 | 61.2 | 69.8 | 44.8 |
| **average** | **62.7** | **68.3** | **45.2** |

Table 7: Hardness measurements from tires, measured at -25°C

| measurement at -25°C | the sample 1 | the sample 2 | the sample 3 |
|---|---|---|---|
| 1 | 67.1 | 70.6 | 80 |
| 2 | 63.6 | 71.2 | 80.1 |
| 3 | 66.8 | 71.5 | 78.9 |
| 4 | 63.5 | 72.4 | 76.4 |
| 5 | 66.3 | 70.9 | 81.3 |
| 6 | 63.2 | 71.5 | 82.4 |
| 7 | 66.9 | 69.4 | 78.1 |
| 8 | 62.8 | 70.9 | 76.3 |
| **average** | **65.0** | **71.1** | **79.2** |

These hardness measurements demonstrate how different rubber compounds can behave when temperature is dropping. The measured hardness of the sample 1 (as well as the hardness of the sample 2) was increased about 2 Shore A units (the sample 1: 62.7 to 65.0 and the sample 2: 68.3 to 71.1), while the hardness of the sample 3 changed 34 Shore A units (45.2 to 79.2).

The invention has been described with the aid of illustrations and examples. The invention is not limited solely to the above presented embodiments but may be modified within the scope of the appended claims.

## Claims

1.  A method for manufacturing a studded pneumatic tire for a vehicle, the tire (1) comprising

    - studs (10),
    - at least one ply (288),
    - at least one metal belt (286, 287), and
    - optionally, at least one textile belt (284),
    wherein the tire (1) further comprises

      - a cap layer (23) forming at least part of a running surface of the studded pneumatic tire,
      - an underlayer (21) made of a first rubber compound, and
      - an intermediate layer (22) made of a second rubber compound, the intermediate layer (22) being arranged, at least partially, between the underlayer (21) and the cap layer (23),

    wherein the method comprises

      - forming an annular belt comprising

- at least one metal belt (286, 287),
- optionally at least one textile belt (284),
- the underlayer (21),
- the intermediate layer (22), and
- the cap layer (23),

  - arranging the annular belt onto an annular carcass comprising the at least one ply to form a preform
  - vulcanizing the preform, and
  - installing studs (10).

2. A studded pneumatic tire for a vehicle, the studded pneumatic tire (1) comprising studs (10) and

   - at least one ply (288),
   - at least one metal belt (286, 287), and
   - optionally, at least one textile belt (284),

   wherein the tire further comprises

   - a cap layer (23) forming at least part of a running surface of the studded pneumatic tire,
   - an underlayer (21) made of a first rubber compound, and
   - an intermediate layer (22) made of a second rubber compound, the intermediate layer (22) being arranged, at least partially, between the underlayer (21) and the cap layer (23).

3. The studded pneumatic tire or the method according to claim 1 or 2, wherein

   - a position of a tan delta maximum of the underlayer (21) and/or the first rubber compound is configured to be between -10°C and +15°C, and
   - optionally, a position of a tan delta maximum of the intermediate layer (22) and/or the second rubber compound is configured to be between -40°C and -70°C,

   determined according to ISO 4664-1:2011 in compression.

4. The studded pneumatic tire or the method according to any of the preceding claims, wherein

   - an average thickness of the underlayer (21) is at least 0.5 mm and not greater than 7 mm, and
   - an average thickness of the intermediate layer (22) is at least 0.4 mm and not greater than 7 mm.

5. The studded pneumatic tire or the method according to any of the preceding claims, wherein one or more than one stud (10), preferably each stud (10), comprises a bottom flange (14), a waist (13), and an upper flange (12), and

   - at least part of the bottom flange (14) is surrounded by the underlayer (21),
   - at least part of the waist (13) is surrounded by the intermediate layer (22), and
   - at least part of the upper flange (12) is surrounded by the cap layer (23).

6. The studded pneumatic tire or the method according to any of the preceding claims, wherein

   - a thickness of the underlayer (21) determined from a location of a/the stud (10), from a bottom (14b) of the stud to an inner surface (25) of the underlayer, is at least 0.3 mm, preferably at least 0.6 mm, and
   - optionally, a thickness of the intermediate layer (22), determined at a location wherein the intermediate layer is surrounding the stud (10), is at least 0.4 mm, preferably at least 0.5 mm.

7. The studded pneumatic tire or the method according to any of the preceding claims, wherein

   - dynamic stiffness (E*, MPa) of the underlayer (21) is configured to be less than 25 MPa, preferably from 5 to 20 MPa, determined at 20°C, and
   - dynamic stiffness (E*, MPa) of the underlayer (21), determined at 0°C, is configured to be at least 2 times the dynamic stiffness of the underlayer determined at 20°C,

determined according to ISO 4664-1:2011 in compression.

8. The studded pneumatic tire or the method according to any of the preceding claims, wherein

   - the dynamic stiffness of the intermediate layer is configured to be from 25 to 100 MPa, determined at 20°C, and
   - the dynamic stiffness of the intermediate layer, determined at 0°C, is configured to be from 1 to 1.5 times the dynamic stiffness of the intermediate layer determined at 20°C,

   determined according to the standard ISO 4664-1:2011 in compression.

9. The studded pneumatic tire or the method according to any of the preceding claims, wherein

   - the dynamic stiffness (E*, MPa) of the underlayer (21) is configured to be less than 25 MPa, preferably from 5 to 20 MPa, determined at 20°C, and
   - the dynamic stiffness (E*, MPa) of the underlayer (21) determined at -25°C, is configured to be at least 20 times the dynamic stiffness of the underlayer determined at +20°C,

   determined according to the standard ISO 4664-1:2011 in compression.

10. The studded pneumatic tire or the method according to any of the preceding claims, wherein the underlayer (21) comprises

    - natural rubber (NR) from 0 to 70 phr,

      and/or butadiene rubber (BR) from 0 to 30 phr,
      and/or synthetic isoprene rubber (IR) from 0 to 70 phr,
      so that a total amount of (natural rubber, butadiene rubber and synthetic isoprene rubber) is from 0 to 70 phr, preferably from 30 to 60 phr,

    - solution polymerized styrene-butadiene rubber (SSBR) from 30 to 100 phr, preferably from 40 to 70 phr,
    - one or more reinforcing fillers from 35 to 80 phr, and
    - one or more resins from 5 to 40 phr.

11. The studded pneumatic tire or the method according to any of the preceding claims, wherein the underlayer (21) comprises a/the solution-polymerized styrene butadiene rubber (SSBR), wherein the solution-polymerized styrene butadiene rubber has, when preparing the underlayer,

    - a vinyl content in a range between 33% and 65%, preferably in a range between 38% and 61%, wherein the vinyl contents are determined in mol % relative to the butadiene, and
    - a styrene content between 25% and 45%, preferably between 27% and 40%, wherein the styrene contents are determined in mass % relative to the whole polymer

    determined according to ISO 21561-1:2015.

12. The studded pneumatic tire or the method according to any of the preceding claims, wherein the underlayer (21) contains

    - a total amount of 10 to 50 phr, preferable 10 to 40 phr of natural rubber and/or synthetic isoprene rubber, and
    - optionally, 10 to 30 phr, preferable 10-20 phr of polybutadiene rubber.

13. The studded pneumatic tire or the method according to any of the preceding claims, wherein of the underlayer (21) comprises one or more reinforcing fillers selected from

    - carbon blacks, and
    - silicas,

    wherein a total amount of said reinforcing fillers is from 35 to 80 phr, more preferably from 40 to 70 phr.

**14.** The studded pneumatic tire or the method according to any of the preceding claims, wherein

- the first rubber compound has a first hardness (ShA) between 45 ShA and 65 ShA, determined at an ambient temperature of 23°C according to standard ASTM D2240-15, and
- the second rubber compound has a second hardness (ShA) between 66 ShA and 80 ShA, determined at an ambient temperature of 23°C according to standard ASTM D2240-15.

**15.** The studded pneumatic tire or the method according to any of the preceding claims 1 to 13, wherein

- the first rubber compound has a first hardness (ShA) between 43 ShA and 62 ShA, determined at an ambient temperature of 22 °C according to standard ASTM D2240-15, and
- the second rubber compound has a second hardness (ShA) between 63 ShA and 80 ShA, determined at an ambient temperature of 22 °C according to standard ASTM D2240-15.

**16.** The studded pneumatic tire or the method according to any of the preceding claims, wherein the first rubber compound has a/the first hardness (ShA) and the second rubber compound has a/the second hardness (ShA), and a hardness (ShA) difference between the first rubber compound and the second rubber compound is at least 7% determined at -25°C so that the second rubber compound is at least 7% softer than the first rubber compound, determined according to standard ASTM D2240-15 with an exception that the temperature is -25°C and the rubber compounds are tempered according to Table 1 of the specification.

**17.** The studded pneumatic tire or the method according to any of the preceding claims, wherein the first rubber compound has a/the first hardness (ShA) and the second rubber compound has a/the second hardness (ShA), and a hardness (ShA) difference between the first rubber compound and the second rubber compound is at least 10% determined at -25°C so that the second rubber compound is at least 10% softer than the first rubber compound, determined according to standard ASTM D2240-15 with an exception that the temperature is -25°C and the rubber compounds are tempered according to Table 1 of the specification.

Fig. 1a

Fig. 1b

Fig. 2a

Fig. 2b

Fig. 3a

Fig. 3b1

Fig. 3b2

Fig.3c

Fig. 4a

Fig. 4b

Fig. 4c

Fig. 4d

Fig. 4e

Fig. 5a

Fig. 5b

Fig. 6a

Fig. 6b

Fig. 7a

Fig. 7b

Fig. 7c

Europäisches Patentamt

European Patent Office

Office européen des brevets

# EUROPEAN SEARCH REPORT

**Application Number**

EP 24 17 3862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/411657 A1 (OJALA ANNE [FI] ET AL) 29 December 2022 (2022-12-29) | 1,2 | INV.<br>B60C9/20 |
| A | * paragraphs [0038], [0039], [0045], [0051], [0056], [0066], [0096]; claims 1, 5; figures 1b, 1c, 1d * | 3-17 | B60C11/00<br>B60C11/16 |
| Y | CN 112 399 923 B (PIRELLI) 28 March 2023 (2023-03-28) | 1,2,4,13 | |
| A | * paragraphs [0003] - [0006], [0021], [0022], [0175] - [0178]; claim 1; figure 3 * | 3,5-12, 14-17 | |
| Y | EP 3 838 617 B1 (GOODYEAR TIRE & RUBBER [US]) 21 December 2022 (2022-12-21) | 1,2,4,13 | |
| A | * paragraphs [0013], [0070], [0076]; claims 1, 5-8; figures 2, 3 * | 3,5-12, 14-17 | |
| Y | US 8 464 769 B2 (YOSHINAKA NOBUYOSHI [JP]; HANYA MASAHIRO [JP] ET AL.) 18 June 2013 (2013-06-18) | 1,2 | |
| A | * claims 1, 3, 4, 6, 9-16; figure 3 * | 3-17 | **TECHNICAL FIELDS SEARCHED (IPC)**<br><br>B60C<br>C01B |

The present search report has been drawn up for all claims

| Place of search | Date of completion of the search | Examiner |
|---|---|---|
| Munich | 30 August 2024 | Balázs, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 3862

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2024

| Patent document cited in search report | | Publication date | Patent family member(s) | | Publication date |
|---|---|---|---|---|---|
| US 2022411657 | A1 | 29-12-2022 | CN | 115109329 A | 27-09-2022 |
| | | | EP | 4059996 A1 | 21-09-2022 |
| | | | FI | 20215306 A1 | 20-09-2022 |
| | | | US | 2022411657 A1 | 29-12-2022 |
| CN 112399923 | B | 28-03-2023 | CA | 3102053 A1 | 16-01-2020 |
| | | | CN | 112399923 A | 23-02-2021 |
| | | | EP | 3820719 A1 | 19-05-2021 |
| | | | RU | 2764232 C1 | 14-01-2022 |
| | | | WO | 2020012277 A1 | 16-01-2020 |
| EP 3838617 | B1 | 21-12-2022 | EP | 3838617 A1 | 23-06-2021 |
| | | | US | 2021188007 A1 | 24-06-2021 |
| US 8464769 | B2 | 18-06-2013 | CN | 101888934 A | 17-11-2010 |
| | | | EP | 2230099 A1 | 22-09-2010 |
| | | | JP | 4295795 B2 | 15-07-2009 |
| | | | JP | 2009137495 A | 25-06-2009 |
| | | | US | 2010319825 A1 | 23-12-2010 |
| | | | WO | 2009072328 A1 | 11-06-2009 |